(19) Europäisches Patentamt

European Patent Office

Office européen des brevets

(11) **EP 1 173 795 B1**

(12) **EUROPEAN PATENT SPECIFICATION**

(45) Date of publication and mention
of the grant of the patent:
**02.07.2003 Bulletin 2003/27**

(21) Application number: **00922663.0**

(22) Date of filing: **22.04.2000**

(51) Int Cl.⁷: $G03G\ 5/00$

(86) International application number:
**PCT/EP00/03650**

(87) International publication number:
**WO 00/065409 (02.11.2000 Gazette 2000/44)**

(54) **OPTICAL STORAGE MEDIUM**

OPTISCHES SPEICHERUNGSMEDIUM

SUPPORT DE STOCKAGE OPTIQUE

(84) Designated Contracting States:
**AT BE CH CY DE DK ES FI FR GB GR IE IT LI LU
MC NL PT SE**

(30) Priority: **22.04.1999 EP 99107975**

(43) Date of publication of application:
**23.01.2002 Bulletin 2002/04**

(73) Proprietor: **3M Innovative Properties Company
Saint Paul, MN 55133-3427 (US)**

(72) Inventor: **SCHOEPPEL, Wolfgang
D-41470 Neuss (DE)**

(74) Representative: **Wilhelm, Stefan M.
Office of Intellectual Property Counsel,
c/o 3M Deutschland GmbH,
Carl-Schurz-Strasse 1
41453 Neuss (DE)**

(56) References cited:
**EP-A- 0 287 394      EP-A- 0 345 360
EP-A- 0 384 041      EP-A- 0 526 224
EP-A- 0 855 703      US-A- 4 551 733**

- **PATENT ABSTRACTS OF JAPAN vol. 1998, no.
O D, 30 January 1998 (1998-01-30) & JP 09
237440 A (NITTO DENKO CORP), 9 September
1997 (1997-09-09)**

- **PATENT ABSTRACTS OF JAPAN vol. 009, no.
285 (P-404), 12 November 1985 (1985-11-12) & JP
60 125945 A (DAICEL KAGAKU KOGYO KK), 5
July 1985 (1985-07-05)**
- **PATENT ABSTRACTS OF JAPAN vol. 99, no. 2,
26 February 1999 (1999-02-26) & JP 10 302316 A
(RICOH CO LTD), 13 November 1998 (1998-11-13)**
- **PATENT ABSTRACTS OF JAPAN vol. 013, no.
131 (P-850), 31 March 1989 (1989-03-31) & JP 63
300439 A (MATSUSHITA ELECTRIC IND CO
LTD), 7 December 1988 (1988-12-07)**
- **PATENT ABSTRACTS OF JAPAN vol. 006, no.
145 (P-132), 4 August 1982 (1982-08-04) & JP 57
066538 A (TOSHIBA CORP), 22 April 1982
(1982-04-22)**
- **PATENT ABSTRACTS OF JAPAN vol. 012, no.
062 (P-670), 25 February 1988 (1988-02-25) & JP
62 204450 A (FUJITSU LTD), 9 September 1987
(1987-09-09)**
- **PATENT ABSTRACTS OF JAPAN vol. 012, no.
288 (P-741), 8 August 1988 (1988-08-08) & JP 63
064645 A (CANON INC), 23 March 1988
(1988-03-23)**
- **DATABASE WPI Section Ch, Week 198929
Derwent Publications Ltd., London, GB; Class
A14, AN 1989-210062 XP002144535 & JP 01
146916 A (HITACHI LTD), 8 June 1989
(1989-06-08)**

Remarks:
The file contains technical information submitted
after the application was filed and not included in this
specification

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Field of the invention

The present invention refers to an optical storage medium and, in particular, to a Digital Video Recordable disc (DVR) from which information can be read out and/or into which information can be recorded with a light beam, said optical storage medium comprising at least one base member bearing on the side of the base member on which the light beam is incident, one or more readable and/or recordable information storage layers and one or more light-transmissive cover films. The present invention furthermore refers to a method of manufacturing an optical storage medium and, in particular, to a Digital Video Recordable disc (DVR).

Background of the invention

DVR discs exhibit a high storage capacity which renders them useful for digital recording and storage.

Another high storage capacity format is referred to as DVD (Digital Video Disc, sometimes also Digital Versatile Disc). DVDs are disclosed, for example, in JP-A-9/237,440, in JP-A-60/125,945 and in EP-A-855,703.

The optical recording media disclosed in EP-A-287,394 comprise a substrate, tracking grooves, optical recording parts (tracks), an adhesive layer and a base. The substrate and the base have a thickness of 400 μm and 300 μm, respectively, and the recording medium is bonded by hot-melt adhesive resins. Requirements regarding the transmittance of the optical recording media are not discussed. EP-A-384,041 discloses a lamination process for the production of a heat-mode recording laminate using easily deformable adhesive layers which can be opaque and preferably comprise blowing agents. The optical recording medium disclosed in EP-A-526,224 Is bonded by a low melting adhesive which is not a pressure-sensitive adhesive. Requirements regarding the transmittance of the optical recording medium are not disclosed. JP-A-10/302,316 discloses a CD-type optical disc comprising a printing layer which can be viewed through the upper light-transmissive substrate whereas the information is read out from below through the lower light-transmissive substrate. JP-A-63/300,439 relates to an optical card comprising a fluorocarbon film, an optical recording layer, a polyethylene film on a PVC base material bearing a fluorocarbon film. EP-A-345,360 discloses a laminate for protecting an optical recording layer comprising an organic solvent-resistant synthetic resin layer which is required because of the presence of an organic solvent in the information recording layer. The protected optical discs disclosed in US 4,551,733 are secured mechanically and not bonded by means of a pressure-sensitive adhesive. The disc comprises a gas chamber through which an air flow is generated during operation. JP-A-57/066,538 discloses an information storage medium which is bonded by means of an epoxy adhesive. The construction comprises a protective layer between the epoxy adhesive layer and the information recording layer. The optical disc disclosed in JP-A-62/204,450 comprises an air gap between the cover substrate and the recording layer. The optical disc does not include an adhesive tape. The card-shaped information recording medium of JP-A-63/064,645 does not comprise an adhesive layer. The double-refraction is improved by a pressurized-heat treatment and an upper limit of 60 nm is mentioned for the in-plane retardation. JP-A-01/146,916 discloses a resin useful in 1.2 mm thick photo disc base sheets so that the overall thickness of the photo disc is more than 2.4 mm.

Typical constructions and formats of DVR discs are described, for example, in EP 0,729,141, EP 0,867,873 and EP 0,874,362.

DVR discs generally comprise a disc-shaped substrate or base member exhibiting on one or both major surfaces an information storage layer comprising a structure of lands and grooves. The DVR discs further comprise a light-transmissive cover film which is applied to the information storage layer on one or both sides of the film.

It is disclosed in EP 0,867,873 that the light-transmissive cover film can be obtained by spin-coating a liquid ultraviolet-curable resin onto the information storage film with subsequent curing.

While light-transmissive films obtained by such technique tend to exhibit a low surface roughness and advantageous transmission properties, it is difficult to control the thickness variation of the resulting film.

Spin-coating of a liquid UV-curable resin with a low variation of the thickness of the liquid layer requires, for example, that the resin is dosed into the centre of the disc. If the liquid resin is applied off-centre a large variation of the thickness of the resulting spin-coated resin layer is obtained. Since typical DVR discs comprise a central hole removable pieces have to be attached to the disc to temporarily close the central hole during spin coating. Even when applying the liquid resin to the centre of the DVR disc it is difficult to obtain the required layer thickness variation up to the outer edge of the disc. The main problem is that the centrifugal force which is pushing the liquid adhesive from the centre of the disc to its circumference, linearly increases with the radius. Equilibrium is obtained from the action of the centrifugal force on the one side and the frictional force which is due to the viscosity of the liquid adhesive, on the other side. Due to the radius dependence of the centrifugal force it is in principle not possible to obtain a layer of constant thickness. It has been suggested to decrease the thickness variation by slightly increasing the diameter of the disc and obtaining the required size by die-cutting the DVR disc including the disc shaped base member after spin-coating and preferably UV curing. Die-cutting of the disc shaped member after curing is disadvantageous because this establishes an additional process step and may result in the formation of debris and/or introduce stress into the base member which translates into optical distortions of the light-transmissive layers. UV curing may also result in shrinkage and/or distortion of the UV-curable layer and in unfavourable heat generation upon curing.

The thickness variation introduced by the light-transmissive cover film into the optical storage medium can be reduced by using a prefabricated light-transmissive cover film having a low thickness variation and adhering such film to the information storage layer by means of a thin-spin-coated layer of a UV-curable liquid resin as is disclosed, for example, in EP 0,867,873. This method has, however, several disadvantages. Spin-coating of a liquid adhesive resin layer with a thickness of as low as, for example, 5 µm requires a considerable amount of time which renders the process unfavourable from an economic point of view. It is also difficult to avoid the formation of air bubbles in the spin-coated liquid adhesive resin layer which adversely affects the optical properties of the resulting optical storage medium.

It was found by the present inventor that optical storage media with advantageous properties and, in particular, with a low thickness variation and low jitter values can be obtained by bonding such media including prefabricated light-transmissive cover films having a low thickness variation, with one or more pressure-sensitive adhesive layers. It was also found by the present inventor that the light-transmissive cover film preferably has a very smooth surface in order to avoid scattering losses of the impinging light.

Although the quality and the performance of the optical recording media and, in particular, of DVRs which are bonded with one or more pressure-sensitive adhesive layers, is generally excellent, it was observed that their transmittance in particular with respect to linearly polarized light varies and may be too low.

It was therefore an object of the present invention to provide optical storage media such as DVRs from which information can be read out and/or into which information can be recorded with a light beam, said optical storage medium comprising one or more base members bearing on one side of the base members on which the light beam is incident, one or more information storage layers and at least one light-transmissive cover film, said cover films being bonded to each other, to the surface of the base members on which the light beam is incident and/or to one or more information storage layers by means of one or more light-transmissive pressure-sensitive adhesive layers, whereby the transmission of such recording media in particular with respect to linearly polarized light is high and can be controlled reproducably. It was another object of the present invention to provide a method of preparing such novel optical storage media and, in particular, DVR disc type optical storage media.

Brief description of the invention

The present invention relates to an optical storage medium from which Information can be read out and/or into which information can be recorded with a light beam (6), said optical storage medium comprising one or more base members (1) bearing on the side of the base members (1) on which the light beam (6) is incident, one or more information storage layers (3) and at least one light-transmissive cover film (5) with a thickness of from 10-200 µm wherein said cover films (5) are bonded to each other, to the surface (2) of the base members (1) on which the light beam (6) is incident and/or to one or more information storage layers (3) by means of one or more light-transmissive pressure-sensitive adhesive layers (4), and wherein said cover films (5) exhibit a vertical birefringence of less than 0.001 at 20 °C at least at the wavelength or wavelength spectrum, respectively, of said light beam (6) and/or an in-plane retardation of less than ± 25 nm at 20 °C at least at the wavelength or wavelength spectrum, respectively, of said light beam (6).

The present invention furthermore relates to a method of preparing an optical recording medium as described above comprising

(1) providing at least one base member (1) having a surface (2) on which the light beam (6) is incident, said surface optionally comprising a structure of pits bearing an information storage layer (3),

(2) providing a multilayer film (12) comprising in the order given a releasable protective film (7), a light-transmissive cover film (5) the inner surface of which optionally comprising a structure of pits bearing an information storage layer (3), a light-transmissive pressure-sensitive adhesive layer (4) and a release liner (8), optionally further comprising between the light-transmissive cover film (5) and the pressure-sensitive adhesive film one or more further light-transmissive cover films (5') bonded to each other by means of one or more further light-transmissive pressure-sensitive adhesive layers (4')

(3) removing said release liner (8) and

(4) laminating the multilayer film (12) to the surface of the information storage layer (3) on the surface (2) of the base member (1).

Brief description of the figures

*Fig. 1a* schematically shows a specific embodiment of the optical recording media according to the present invention comprising a base member 1, the surface 2 of which where the light beam 6 is incident upon, comprises a structure of lands and grooves which forms part of an information storage layer 3, said optical storage medium further comprising a light-transmissive cover film 5 bonded to the information storage layer 3 by means of a pressure-sensitive adhesive layer 4.

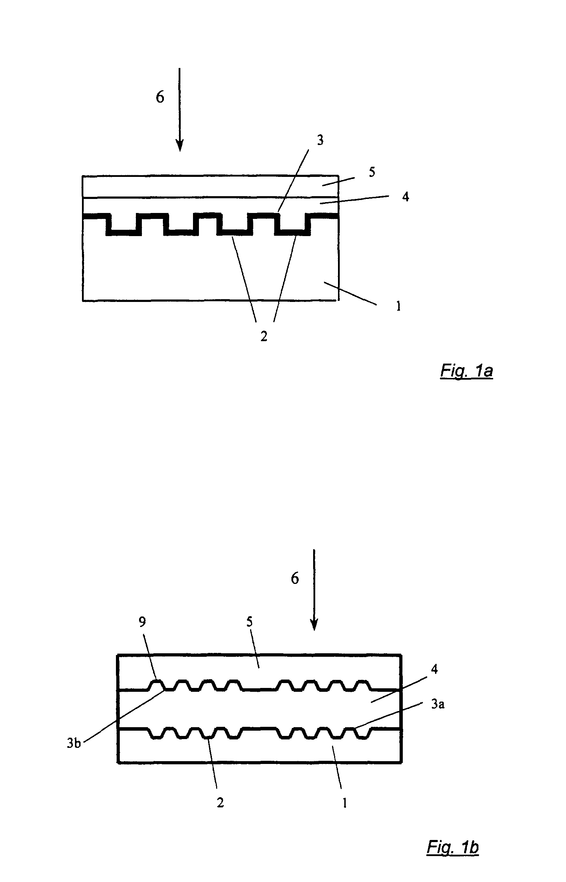

*Fig. 1b* schematically shows another specific embodiment of the optical recording media according to the present invention comprising a base member 1, the surface 2 of which comprises a structure of lands and grooves which forms part of a first information storage layer 3a, said optical storage medium further comprising a light-transmissive cover film 5 onto which the light beam 6 is incident upon, the surface 9 of which comprises a structure of lands and grooves which forms part of a second information storage layer 3b which is bonded to the information storage layer 3a by means of a pressure-sensitive adhesive layer 4.

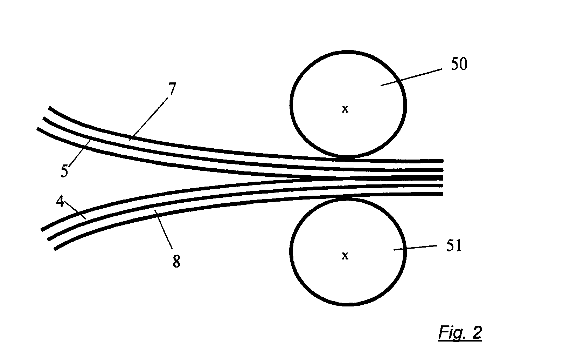

*Fig. 2* schematically shows the lamination of a first laminate comprising a releasable protective film 7 and a light-transmissive cover film 5 to a second laminate comprising a light-transmissive pressure-sensitive adhesive layer 4 and a smooth release liner 8 between two rollers 50,51 so that the exposed surface of the pressure-sensitive adhesive layer 4 is adhered to the exposed surface of the light-transmissive cover film 5.

*Fig. 3* schematically shows removal of the release liner 8 from a laminate comprising in the order given a releasable protective film 7, a light-transmissive cover film 5 and a pressure-sensitive adhesive layer 4 by drawing the release liner over roller 52 providing a bondable laminate 12, attachment of such laminate to a vacuum plate holder 53 by means of air suction and subsequent die-cutting to provide a disc-shaped laminate having a center hole 10 and an outer circumference 11, the die-cutting tool not being shown but indicated only by arrows.

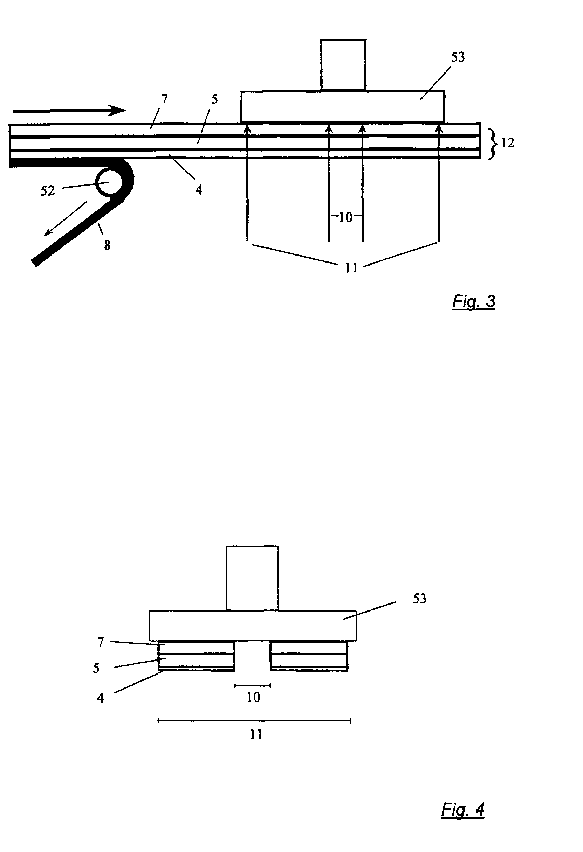

*Fig. 4* schematically shows a disc-shaped laminate comprising in the order given a releasable protective film 7, a light-transmissive cover film 5 and an exposed light-transmissive pressure-sensitive adhesive layer 4, said laminate having a center hole 10 and an outer circumference 11 and being attached to the vacuum plate holder 53 by means of air suction.

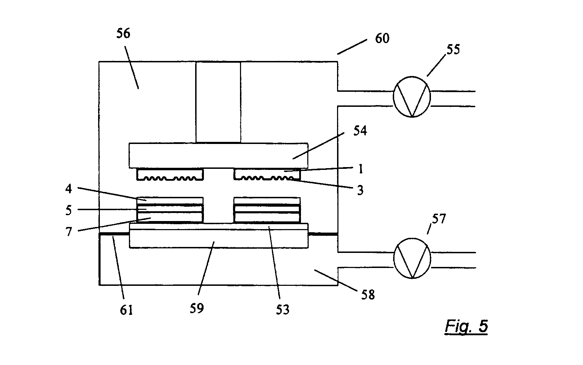

*Fig. 5* schematically shows a vacuum bonding apparatus 60 having an upper vacuum chamber 56 and a bottom pressure chamber 58, the vacuum chamber being pumpable by means of pump 55 and the bottom chamber being pressurizable by means of a pump 57, the upper chamber comprising a top plate 54 and a movable bottom plate 59 separating the upper chamber 56 and the bottom chamber 58 in combination with a flexible seal 61, the bottom plate 59 comprising vacuum plate holder 53 bearing a die-cut laminate of releasable protective layer 7, light-transmissive cover film 5 and pressure-sensitive adhesive layer 4, and the top plate 54 holding the base member 1 bearing the information storage layer 3.

It should be noted that the figures are schematic only and, in particular, not drawn to scale. In Fig. 1a the thickness of the base member 1 typically is up to one order of magnitude or more larger than the thickness of the light-transmissive cover film 5 whereas the depth of the grooves is typically in the range of 5 to 50 nm and thus negligible in comparison to the thickness of the base member 1.

Detailed description of the invention

The optical storage media of the present invention comprise at least one base member bearing on the side of the base on which the light is incident, one or more information storage layers which may be readable and/or recordable, at least one light-transmissive pressure-sensitive adhesive layer and at least one light-transmissive cover film.
Fig. 1a shows as an example a schematic representation of a cross-sectional view of a specific embodiment of an optical storage medium according to the present invention comprising a base member 1 exhibiting on its major surface 2 on the side where the light 6 is incident upon, a structure of lands and grooves which forms part of the information storage layer 3. The information storage layer 3 bears the pressure-sensitive adhesive layer 4 the light-transmissive cover film 5 is bonded to.
More complex constructions of optical storage media which are useful in the present invention, are described, for example, in EP 0,867,873 which is incorporated herein by reference. The optical storage media may comprise, for example, two or more information storage layers 3 arranged above each other on one or two, respectively, major surfaces of the substrate. Fig. 1b schematically shows a construction comprising two information storage layers 3a, 3b applied to the inner surface 2 of the base member and the inner surface 9 of the light-transmissive cover film; respectively.

The base member 1 may be of any shape but preferably is a disc exhibiting a centre hole useful for centering the assembled optical storage medium in a recording or playing station. The disc or annulus shaped substrates preferably have an outer diameter of about 50 to about 360 mm and an inner diameter of the centre hole of about 5 to about 35 mm, and the thickness preferably is between 0.3 and 3.0 mm and especially preferably between 0.8 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmeth-acrylates, polycarbonate or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive layer and the depth of a groove in order to minimize optical crosstalk between consecutive lands and grooves are disclosed, for example, in EP 0,874,362 or EP 0,867,873 which are incorporated herein by reference. The track pitch which is the distance between the centreline of adjacent physical tracks as measured in radial direction, typically is 0.64 µm or less.

The structure of pits can be moulded into one or both, respectively, surfaces of the base member or members. This process, which is described in detail in EP 0,729,141, p. 4, lns. 14 - 46, usually comprises a master disc-forming step (as schematically shown in Fig. 4A - 4G of EP '141) and an injection moulding step (as schematically shown in Fig. 5A - 5B of EP '141); EP '141 is incorporated herein by reference. It is also possible, however, that a structure of pits is obtained in the light-transmissive cover film by passing the light-transmissive cover film which is heated to a temperature above its glass transition temperature between two rollers at least one of them exhibiting a patterned structure. This technique is shown schematically in Fig. 10 of EP 0,867,873 where the light-transmissive cover film is passed between a roll and a stamper. The light-transmissive cover film thus obtained can be bonded to the base member or to one or more other light-transmissive cover films optionally bearing a structure of pits, by means of a pressure-sensitive adhesive layer so that optical storage media having a multiplicity of information storage layers can be obtained. A light-transmissive cover film exhibiting a structure of pits can also be obtained by the polymerization casting technique described below applying the coatable, polymerizable precursor of the light-transmissive cover film to an appropriately shaped substrate exhibiting a patterned structure, and subsequent polymerization and removal of the cured light-transmissive cover film from such substrate.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 - 60 nm which can be obtained, for example, by sputtering.

Recordable optical storage media may be of phase-change type or magnetooptical type. According to EP 0,867,873 phase-change type information storage layers may be obtained by successively forming on the structure of pits a reflective film such as an Al film, a GeSbTe film and an ZnS-SiO2 film. More complex phase-change type information storage layers are described, for example, in EP 0,874,362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

It was found by the present inventor that optical storage media with a low thickness variation, advantageous optical properties and low jitter values can be obtained by bonding such media with one or more light-transmissive pressure-sensitive adhesive layers. The present invention thus provides to optical storage media which are bonded by one or more pressure-sensitive adhesive layers while avoiding the disadvantageous UV-curable resin layers of prior art.

In the specific embodiment of the optical storage medium schematically shown in Fig.1a the pressure-sensitive adhesive layer 4 bonds the light-transmissive cover film 5 to the information storage layer 3. In more complicated constructions comprising a multiplicity of information storage layers as was described above, pressure-sensitive adhesive layers 4 can also be used to bond two or more light-transmissive cover films 5 optionally comprising an information storage layer 3, to each other.

Another optical storage media of the present invention comprises two or more information storage layers. In the specific embodiment of the optical storage medium schematically shown in Fig. 1b the pressure-sensitive adhesive layer 4 bonds a base member 1 bearing a first information storage layer 3a to a second information storage layer 3b on a light-transmissive cover film 5 onto which the light beam 6 is incident upon.

The pressure-sensitive adhesive layer is required to be optically transparent or light-transmissive at the wavelength of the incident light beam 6 with which the information is read out from and/or recorded into the optical storage medium. Suitable light sources to generate light beam 6 comprise lasers having, for example, emission lines in the wavelength range of between 400 - 700 nm and preferably of between 600 - 660 nm for red lasers and 400 - 420 nm for blue lasers. It is also possible to use polychromatic light sources with appropriate monochromatic filters such as interference filters. The optical transparency or fight-transmission of the pressure-sensitive adhesive at the wavelength of the incident light which can be measured, for example, according to ASTM D 1746, preferably is at least 80 % and more preferably at least 85 %.

The pressure-sensitive adhesive layer may comprise a transparent backing and/or carrier layer such as, for example, optionally surface-treated, amorphous polymer layers such as polyethylene terephthalate (PET), polycarbonate or polymethylmethacrylate (PMMA) layers carrying on each side an adhesive layer, but preferably it is a transfer film comprising no backing and/or carrier layer. In case of a transfer film, the pressure-sensitive adhesive layer preferably has an average thickness of between 10 - 100 μm, more preferably, of between 15 - 80 μm, and especially preferably of between 15 - 50 μm, whereas double-sided adhesive tapes comprising a backing and/or carrier layer, may have a thickness of between 50 μm and 150 μm, and more preferably of between 50 μm and 100 μm.

The optical transparency requirements are generally fulfilled by acrylate-based pressure-sensitive adhesives, but silicone-based pressure-sensitive adhesives, rubber resin-based pressure-sensitive adhesives, block copolymer-based adhesives, especially those comprising hydrogenated elastomers, or vinylether polymer-based pressure-sensitive adhesives can also be used. Any of these materials may be compounded with plasticizers and/or tackifiers to tailor their properties. Acrylate-based pressure-sensitive adhesives are preferred.

Acrylate-based pressure-sensitive adhesives which are useful in the present invention can be obtained by polymerization of precursors comprising one or more alkyl acrylates the alkyl groups of which have an average of 4 - 14 atoms. The term average of 4 - 14 atoms means that the average number of carbon (C) atoms of the alkyl acrylate compounds is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the pressure-sensitive adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

The polymerizable precursor of the pressure-sensitive adhesive can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the pressure-sensitive adhesive can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The pressure-sensitive adhesive should preferably be essentially free of acrylic acid in order to avoid severe damaging of the inner surface of the members by corrosion.

Acrylate-based pressure-sensitive adhesives which are useful in the present invention are described, for example, in US 4,181,752, US 4,418,120, WO 95/13,331 or in Handbook of Pressure-sensitive Adhesive Technology; D. Satas ed.; Second Edition, New York 1989, pp. 396- 491. These references are incorporated herein by reference.

The pressure-sensitive adhesive layers useful in the present invention may comprise further components such as, for example, polymer additives, thickening agents, tackifiers, chain transfer agents and other additives provided that they do not reduce the transparency of the pressure-sensitive adhesive or adversely affect the uniformity of the thickness of the pressure-sensitive adhesive layer to an undesirable and/or unacceptable degree. The amount of such additive preferably is not more than 5 wt. % and more preferably between 0 - 2 wt. % with respect to the mass of the pressure-sensitive adhesive.

Pressure-sensitive adhesives which are useful in the present invention preferably exhibit a modulus G' (measured at a temperature of 23° C and a frequency of 1 radian/second) of between $5x10^5$ to $2x10^6$ dyne/cm$^2$, more preferably of between $6x10^5$ to $1.5x10^6$ dyne/cm$^2$ and especially preferably of between $6.5x10^5$ to $9.5x10^5$ dyne/cm$^2$.

The pressure-sensitive adhesive layer can be prepared by coating the pressure-sensitive adhesive layer as an organic or aqueous solution or dispersion onto a release liner with subsequent evaporation of the solvent and optional curing, or as an essentially solvent-free, prepolymerized syrup with subsequent curing. The latter method is described in some detail, for example, in US 4,181,752 whereas coating of a solution or dispersion of the pressure-sensitive adhesive is described, for example, in Handbook of Pressure-sensitive Adhesive Technology; D. Satas ed.; Second Edition, New York 1989, pp. 767- 868 (incorporated herein by reference). The exposed surface of the pressure-sensitive adhesive layer is usually protected with a second release liner prior to or after curing.

It was found by the present inventors that the thickness of the pressure-sensitive adhesive layer has to be carefully controlled in order to allow for the preparation of very uniform optical recording media. It was found that the variation of the thickness of the optical recording medium introduced by the pressure-sensitive adhesive layer, preferably is not more than about $\pm$ 3 $\mu$m and more preferably not more than about $\pm$ 2 $\mu$m as measured across an arbitrarily selected cross-section of the optical recording medium over its entire extension using the method of measurement described in the test section below.

A preferred method of preparing very flat, uniform precision caliper pressure-sensitive adhesive layers which fulfill these requirements, are described, for example, in WO 95/29,766 incorporated herein by reference. The method comprises coating of an essentially solvent-free, polymerizable, syrupy precursor of the pressure-sensitive adhesive through a die onto the surface of a substrate as the substrate moves relative to the die. The die includes a channel adapted to receive the precursor of the pressure-sensitive adhesive and an adjustable width slot in communication with said channel through which the precursor is passed. The slot is formed between a substantially straight, sharp edge located on the downstream side of the substrate and a land located on the upstream side of the substrate. The die coating method and the precision coating die are described in more detail in WO 95/29,764 and WO 95/29,765 (incorporated herein by reference). This method can be used, for example, to coat essentially solvent-free, prepolymerized, syrupy precursors of acrylate-based pressure-sensitive adhesives onto a moving belt or a release liner with subsequent curing of the pressure-sensitive adhesive layer. The pressure-sensitive adhesive layer may be directly transferred after curing from the moving belt onto the inner surface of the first member of the optical recording medium, or it may be temporarily stored between release liners prior to application to the inner surface of the first member. When using a moving belt or a release liner with an essentially flat and smooth surface with a surface roughness $R_z$ as defined below of less than 2 $\mu$m, very homogenous pressure-sensitive adhesive layers with a thickness tolerance of $\pm$ 3 $\mu$m or less, preferably of about $\pm$ 2 $\mu$m or less can be obtained. These adhesive layers can be used for the preparation of very uniform optical recording media, and the thickness tolerance introduced by the pressure-sensitive adhesive layer into the optical recording medium is typically $\pm$ 3 $\mu$m or less.

The refractive index of the pressure-sensitive adhesive layer preferably is adapted to the average refractive index of the light-transmissive cover film. The difference between the average refractive index of the light-transmissive cover film and the refractive index of the pressure-sensitive adhesive layer preferably is not more than 0.05 and more preferably less than 0.02. The refractive index of pressure-sensitive adhesives which can be measured, for example, according to ASTM D 542, preferably is at least 1.45 and more preferably at least 1.49. It was found by the present inventors that acrylate-based pressure-sensitive adhesive layers with a refractive index of at least about 1.50 which are useful in the present invention, can be obtained by including a sufficient amount of, for example, phenoxy ethyl acrylate into the polymerizable precursor.

The optical storage media of the present invention comprise one or more light-transmissive cover films which each optionally exhibit on one or both of their major surfaces a structure of pits. It was found by the present inventors that optical storage media with a reproducably high transmittance in particular with respect to linearly polarized light can be obtained by using in such storage media one or more light-transmissive cover films being essentially optically isotropic and preferably having a vertical birefringence of less than 0.001, more preferably of less than $8 x 10^{-4}$ and especially preferably of less than $6.5 x 10^{-4}$ at a temperature of 20 °C and at least at the wavelength or wavelength spectrum, respectively, of the light beam 6 used for recording and/or reading out information.

Light transmissive polymeric films which are essentially optically isotropic and exhibit, in particular, a low value of vertical birefringence have been described in the prior art but their importance for providing optical storage media with high performance, excellent optical properties and, in particular, with a high transmittance towards linearly polarized light has not been recognized so far.

For a given sheet of a polymeric film having a plane extending in x- and y-directions and a thickness d in the z-direction, the vertical birefringence is the difference between the refractive index perpendicular to the plane of the film, e.g. in the z-direction, and the average of the refractive indices in the two principal directions parallel to the plane of the film, e. g., the plane containing the x- and y-directions. The vertical birefringence is measured applying the method of measurement as described below, at a temperature of 20 °C preferably using a laser light source which can also be used for recording and/or reading out, respectively, information into and from, respectively, the optical storage media. Laser light sources which can be used include, for example, those having emission lines in the wavelength range of between 400 - 700 nm. It is also possible to use polychromatic light sources using a monochromatic filter.

The light-transmissive cover film or films, respectively, used in the optical storage media of the present invention preferably furthermore exhibit an in-plane retardation of less than $\pm$ 30 nm, more preferably of less than $\pm$ 25 nm and especially preferably of less than $\pm$ 15 nm at a temperature of 20 °C and the wavelength or wavelength spectrum, respectively, of the light beam used for recording and/or reading out information. The in-plane retardation is measured applying the method of measurement as described below using DVD tester "Prometheus MT 136" commercially available from Dr. Schenk GmbH, Martinsried, Germany. The in-plane birefringence is obtained from the in-plane retardation value by dividing the latter by the thickness of the light-transmissive cover film.

It was found by the present inventor that essentially optically isotropic light-transmissive cover films with the required low values of vertical birefringence and, optionally, in-plane birefringence can be obtained by using, for example, solvent-casting and, in particular, polymerization casting techniques. Contrary to this, preparation of the light-transmissive cover fim by extrusion of the respective polymer tends to result in the formation of stress and at least partial orientation of the polymer chains which translates into optical inhomogenities and, in particular, values of vertical and/or in-plane birefringence of the extruded polymer layer exceeding the values specified above. Therefore, extruded polymer layers can usually not be used as light-transmissive cover films according to the present invention.

Preparation of the light-transmissive cover film by solvent-casting includes dissolving of the polymer in a solvent, casting of the solution onto a smooth substrate or microstructured surface, respectively, in case an information storage layer is to be included into the light-transmissive cover film, and solidifying the polymer by evaporization of the solvent. Preferred polymers include, for example, polycarbonate cellulose triacetate and polyolefin-based polymers such as polydicyclopentadiene or a norbornene/dicyclopentadiene/methyl methacrylate terpolymer. Suitable solvents include, for example dichloromethane, dioxolane, cyclohexanone, tetrahydrofuran, dioxane and combinations thereof.

Preparation of the light-transmissive cover film by polymerization-casting includes preparation of a coatable, syrupy precursor which typically comprises the solution of a partially polymerized, curable precursor of the polymer in excess monomer or oligomer. This solution is then cast on a smooth substrate with subsequent polymerization to provide the light-transmissive cover film. This technique allows for the formation of homopolymers or copolymers. It is also possible that one or more polymers are blended into the polymerizable precursor in order to adjust its viscosity and/or modify the properties of the resulting light-transmissive cover film. It is also possible that the polymerizable precursor comprises one or more solvents in order to adjust its viscosity and coatability but the use of solvent-free polymerizable precursors is preferred. The polymerizable precursor preferably comprises at least one acrylic-functional monomer which, when polymerized, displays a glass transition temperature of at least 10 °C, preferably from about 10 °C to about 140 °C, more preferably from about 20 °C to about 100 °C and especially preferably from about 40 °C to about 60 °C, and/or is not friable.

The light-transmissive cover film obtained by polymerization of the polymerizable precursor preferably is stiff or ductile. As used herein, the term "stiff" means stretch resistant, creep resistant and dimensionally stable. More particularly, the light-transmissive cover film preferably has a tensile modulus at room temperature of more than 1,380 MPa (200 kilopounds per square inch), more preferably of more than 2,070 MPa (300 kpsi) and most preferably of more than 2,760 MPa (400 kpsi).

Tensile modulus of the light-transmissive cover film is determined according to ASTI Test Method D-822-88 using a 10.2 cm (4 inch) gauge length and a separation rate of 5.1 cm/min (2 inches/min).

As used herein, the term "ductile light-transmissive cover film" refers to films having a tensile modulus of less than 1,380 MPa (=200 kpsi) and a tensile elongation at room temperature of greater than 50%, preferably greater than 150%. Tensile modulus and tensile elongation are measured in accordance with ASTI Test Method D-882-88 using a gauge length of 10.2 cm and a separation rate of 12.7 cm/min (5 inches/min). "Tensile elongation" as used herein refers to the elongation at break of the ductile material as measured during the referenced tensile test procedure.

Light-transmissive cover films with the specified values of stiffness or ductility, respectively, are preferred. The tensile test procedures described above are only used, however, to check the mechanical properties of test samples of the light-transmissive cover film. Such test samples are not used in the optical storage media of the present invention. The light-transmissive cover film to be used in the optical storage media of the present invention has to be handled as stress-free as possible in order not to impart optical anisotropy to such film. Therefore, the light-transmissive cover film useful in the present invention should not be subjected to stretching.

The monomer component of the polymerizable precursor of the light-transmissive cover film is preferably selected so that the resulting light-transmissive cover film is non-tacky at room temperature. Tacky light-transmissive cover films may, however, also be useful, for example, if the optical recording medium and, in particular, the DVR according to the present invention is assembled into a cartridge. Monomers which are useful in the present invention include alkyl acrylates the alkyl groups of which have an average of 2 - 24 atoms. The term average of 2 - 24 atoms means that the average number of carbon (C) atoms of the alkyl acrylate compounds is between 4 - 24, preferably between 4 - 12 C atoms and especially preferably between 4 -10 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 2 to 24 and, in particular, from 2 to 20 carbon atoms. Examples of these lower alkyl acrylates used in the invention include but are not limited to, methyl acrylate, ethyl acrylate, propyl acrylate, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate, dodecyl acrylate, hexadecyl acrylate, octadecyl acrylate and eicosyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the light-transmissive cover film preferably contains up to 5 and, in particular, 1 - 4 alkyl acrylates. The average number of carbon atoms in the alkyl groups of the alkyl acrylates as defined above, preferably is between 2 - 20, preferably between 2 - 12 and very particularly between 2 - 6. Blends of different alkyl acrylates may also be used.

The polymerizable precursor of the light-transmissive cover film can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the light-transmissive cover film can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene.

The polymerizable precursor can furthermore include glycerol diacrylate, glycerol triacrylate, ethyleneglycol diacrylate, diethyleneglycol diacrylate, triethyleneglycol dimethacrylate, 1,3-propanediol diacrylate, 1,3-propanediol dimethacrylate, trimethanol triacrylate, 1,2,4-butanetriol trimethylacrylate, 1,4-cyclohexanediol diacrylate, pentaerythritol triacrylate, pentaerythritol tetraacrylate, pentaerythritol tetramethacrylate, sorbitol hexacrylate, bis[1-(2-acryloxy)] p-ethoxyphenyl dimethylmethane, bis[1-(3-acryloxy-2-hydroxy)]-p-propoxyphenyl-dimethyl-methane, tris-hydroxyethyl isocyanurate trimethacrylate, bis-acrylates and bis-methacrylates of polyethylene glycols of a molecular weight of 200-500 and acrylated oligomers such as those described in US 4,642,126.

The polymerizable precursor of the polymer of the light-transmissive cover film may also include film forming materials compatible with the monomer component. Such film-forming materials preferably include polymers reactive with the monomer component, e.g., acrylic functional copolyesters, acrylic functional polyurethane-acrylatecopolymers, dendrimers or acrylate-functional macromers, and also non-reactive polymers which are preferably selected so that they are soluble both in the polymerizable precursor and in the cured precursor, i.e. in the light-transmissive cover film. Non-reactive polymers which when blended with the precursor of the light-transmissive cover film result in a polymer with a negative $\chi$("chi") value are preferred; such non-reactive additives may be selected, for example, from the group of polymers comprising polyalphaolefins, thermoplastic block copolymers, non-reactive acrylic polymers and polyphenylene ethers.

Preferred monomers used in the polymerizable precursor include, for example, (methyl)methacrylate, (methyl) ethylacrylate, (methyl)propylacrylate, lower amounts of (methyl) ($C_4$- $C_8$ alkyl) acrylates, acrylonitrile, methacrylamide, alkyl substituted methacrylamide such as N,N,-dimethylacrylamide, octylacrylamide, N-vinylpyrrolidone, N-vinylcaprolactam or styrene.

The degree of prepolymerization of the polymerizable precursor is preferably chosen as to provide an easily coatable precursor having a viscosity of, for example, between 0.3 and 200 Pa·s at room temperature.

The polymerizable precursor of the polymer of the light-transmissive cover film preferably comprises a monomer component selected from the group comprising (methyl)methacrylate, (methyl)ethylacrylate, (methyl)propylacrylate, lower amounts of (methyl) ($C_4$ - $C_8$ alkyl) acrylates, acrylonitrile, styrene alkyl acrylates, methacrylamides and alkyl substituted methacrylamides, one or more polymerization initiators and optionally one or more vinyl monomers having one or more unsaturated double bonds copolymerizable with the monomer(s) of the polymerizable precursor.

The thickness of the light-transmissive cover film or films, respectively, preferably is between 10 and 200 μm, more preferably between 20 and 150 μm and especially preferably between 40 and 120 μm. In more complicated constructions of the optical storage medium of the present invention comprising two or more light-transmissive cover films, the thickness of each cover layer preferaby is between 10 and 100 μm and more preferably between 20 and 90 μm.

The maximum thickness of the sum of the thicknesses of the light-transmissive cover film or films and the pressure-sensitive adhesive layer or layers of the optical storage media of the present invention can be estimated according to EP 0,867,873 and JP 3-225,650 by using a relationship established in JP 3-225,650 for CDs, between such maximum thickness, the numerical aperture of the optical head device of the optical disc recording and/or reproducing apparatus, the wavelength of the light source utilized and the skew margin. When using a laser light source with a wavelength of approximately 0.65 μm, EP 0,867,873 suggests for the sum of the thicknesses of the light-transmissive cover film or films and the pressure-sensitive adhesive layer or layers a value of 288 μm or less whereas for a blue light laser with a wavelength of 0.4 μm a value of 177 μm or less is disclosed.

In both the solvent-casting and the polymerization casting technique of preparing the light-transmissive cover film(s), the thickness of the cast layer is preferably carefully controlled in order to allow for the preparation of very uniform light-transmissive cover films. It was found that the variation of the thickness of the light-transmissive cover film preferably is not more than ± 3 μm and more preferably not more than ± 2 μm as measured across an arbitrarily selected cross-section of the optical recording medium over its entire extension using the method of measurement described in the test section below.

It was found that the preparation of very flat, uniform precision caliper light-transmissive cover films can preferably be obtained by using the die coating method and the precision coating die described in WO 95/29,764 and WO 95/29,765 cited above. This method can be used, for example, to coat partially prepolymerized, syrupy precursors of the polymer of the light-transmissive cover film or solutions of such polymer, respectively, onto a moving belt or drum or a release liner with subsequent curing of the precursor and/or drying of the solution, respectively. The light-transmissive cover film thus obtained may be directly transferred after curing or drying, respectively, from the moving belt onto the exposed pressure-sensitive adhesive layer. When using a moving belt or a release liner with an essentially flat and smooth surface with a surface roughness $R_z$ as defined below of less than 2 μm, very homogenous light-transmissive cover films with a thickness tolerance of about ± 3 μm or less, preferably of about ± 2 μm or less can be obtained. Suitable belts or drums, respectively, with the required smooth surfaces comprise, for example, highly polished stainless steel surfaces.

It was found by the present inventor that the solvent casting technique provides light-transmissive cover films which are essentially optically isotropic and exhibit, in particular, a low value of vertical birefringence which meets the requirements of the present invention. The vertical birefringence may vary to some degree between different casting runs but it was found by the present inventor that it is possible to obtain light-transmissive cover films with the required vertical birefringence of less than 0.001 at 20 °C at least at the wavelength or wavelength spectrum, respectively, of the incident light beam 6, with a limited number of runs and without undue experimentation.

Generally, the casting process has to be applied so that any stress introduced into the solvent-casted film is minimized. It was found by the present inventor that the light-transmissive cover film is preferably removed from the substrate where it has been solvent-casted upon, with a residual solvent content of, for example, 10 -25% by wt. and more preferably of 12.5 - 17.5 % by wt.. The light-transmissive cover film is then further dried as a free-standing, unsupported film by passing, for example, through a forced air oven.

It was furthermore found that the optical isotropic character of the light-transmissive cover film can be increased and, in particular, its vertical birefringence can be decreased by casting a solution of a suitable polymer and/or a polymerizable precursor on a moving belt or a release liner having a low surface energy of preferably less than about 35 dynes/cm as is disclosed in EP 0,380,028. Suitable low surface energy materials comprise, for example, poly (tetrafluoroethylene), poly(vinylidene fluoride), poly(trifluorochloroethylene), polyethylene and polystyrene with polyethylene, poly(tetrafluoroethylene) and poly(vinylidene fluoride) being especially preferred.

It was furthermore found that the optical isotropic character of the light-.transmissive cover film can be increased and, in particular, its vertical birefringence can be decreased by increasing the thickness of such film. Therefore, in a specific construction of an optical storage medium according to the present invention with a given total thickness of light-transmissive cover film or films and pressure-sensitive adhesive layer or layers, respectively, the vertical birefringence of the light-transmissive cover film can be decreased by increasing the thickness of the light-transmissive cover film or films while correspondingly decreasing the thickness of the pressure-sensitive adhesive layer or layers.

It was furthermore found by the present inventor the optical isotropic character of the light-transmissive cover films can be increased and, in particular, its vertical birefringence can be decreased by decreasing the amount of components in the polymer composition which tend to impart optical anisotropy. It was, for example, found that the optical anisotropic character of polymers, obtained by solvent casting of polymer formulations comprising a polycarbonate polymer and varying amounts of 1,1-bis(4-hydroxyphenyl)-3,3,5-trimethyl cyclohexane (TCM), was decreased with decreasing amounts of TCM.

It was furthermore found by the present inventor that light-transmissive cover films with low or very low values of vertical birefringence can be obtained by the polymerization-casting technique. This technique tends to provide light-transmissive cover films with a higher degree of optical isotropy and, in particular, with values of the vertical birefringence which are as low or lower as those of solvent-cast films. The polymerization-casting technique is preferred.

The in-plane birefringence of the light-transmissive cover films obtained both by the solvent-casting and the polymerization casting technique is typically distinctly lower than the vertical birefringence. The light-transmissive cover films preferably exhibit a value of the in-plane retardation of less than $\pm$ 30 nm and, in particular, of less than $\pm$ 25 nm at 20 °C at least at the wavelength or the wavelength spectrum, respectively, of the incident light beam 6.

Based on these findings, light-transmissive cover films which are essentially optically isotropic and, in particular, exhibit the required value of the vertical birefringence of less than 0.001 and, optionally, the required value of the in-plane birefringence of less than $\pm$ 30 nm in each case at 20°C and at least at the wavelength or wavelength spectrum, respectively, of the incident light beam 6, can reproducably be obtained. Light-transmissive polymer films with the required low values of vertical birefringency and, optionally, in-plane retardation are also available commercially as can be taken from the Example section below.

In a preferred method, a multilayer film comprising a light-transmissive cover film and a pressure-sensitive adhesive layer can be obtained by subsequent casting steps. In this method, a release liner with a smooth surface is provided first, and a light-transmissive cover film is applied to such release liner by solvent-casting or polymerization casting, respectively, with subsequent drying or curing, respectively, as was described above. Then, the curable precursor of a pressure-sensitive adhesive is coated on the exposed surface of the light-transmissive cover film with subsequent curing, as is described above. The resulting multilayer film can, for example, be directly laminated onto the information storage layer formed on the pits exhibiting surface of a base member, if desired, with subsequent removal of the release liner to provide the optical storage medium according to Fig. 1a. Alternatively, a release liner may be laminated to the exposed surface of the pressure-sensitive adhesive layer followed by the removal of the release liner from the light-transmissive cover film and, optionally, the lamination of a releasable protective layer to the light-transmissive cover film.

It was found that it is desirable to laminate a releasable protective film to at least one major surface of the light-transmissive cover film in order to protect the surface of the light-transmissive cover film during handling and mounting of the optical recording media.

A wide variety of polymer films optionally bearing a pressure-sensitive adhesive layer can be used as releasable protective film. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylene terephthalate films or polyurethane films like, for example, extendable elastomeric polyurethanes of the polyetherurethane or polyesterurethane type. It is also possible to use laminates of at least two polymer films the lower exposed film of which being bonded to the light-transmissive cover film 5, exhibiting self-adhering properties. Suitable examples of polymers with self-adhering properties included EVA films (polyethylene-vinylacetate) having a high vinyl acetate content of, for example about 5 - 20 wt. % with respect to the mass of the EVA polymer. Such laminates can be used as releasable protective films without a pressure-sensitive adhesive layer.

The pressure-sensitive adhesive if present is preferably selected so that it can be easily removed from the light-transmissive cover film without leaving behind any residual adhesive. It was found by the present inventors that the pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US 4,166,152 incorporated herein by reference. Releasable protective films which are useful in the present invention are available as protective tape products from 3M; a suitable example is 3M Protective Tape # 2104.

In a preferred method of preparing an optical recording medium according to Fig. 1a, a first laminate comprising a releasable protective film 7 and a light-transmissive cover film 5 is laminated to a second laminate comprising a pressure-sensitive adhesive layer 4 and a smooth release liner 8, between two rolls 50,51 as is schematically shown in Fig. 2. The rolls exhibit a very smooth surface and are arranged to allow for an essentially stress-free and bubble-free lamination of the films.

The resulting laminate is fed into a bonding station schematically shown in Fig. 3 which is operated in a quasi-continuous mode. The release liner 8 is separated from the resulting laminate, for example, by means of a dispensing edge or roll 52 and then attached to a vacuum plate holder 53 by air suction. Using appropriate die-cut equipment (not shown) the die-cut laminate schematically shown in Fig. 4 exhibiting the center hole 10 and the outer circumference 11 corresponding to the dimensions of the disc-shaped base member 1, is obtained. The vacuum plate holder 53 with the attached die-cut laminate is then transferred to a vacuum bonding apparatus 60 schematically shown in Fig. 5. The vacuum bonding apparatus comprises an upper vacuum chamber 56 and a bottom pressure chamber 58 which are separated by the movable bottom plate 59 and the flexible seal 61. The upper chamber 56 can be evacuated by means of pump 55, and the bottom chamber 58 can be evacuated or pressurized, respectively, by means of pump 57. The vacuum plate holder 53 is attached to the bottom plate 59 of the vacuum bonding apparatus 60 with the exposed adhesive layer 4 of the attached die-cut laminate facing up. The base member 1 bearing the information storage layer 3 is attached to the top plate 54 of the vacuum bonding apparatus 60 with the information storage layer 3 facing down. The bottom chamber 58 is evacuated in order to keep the bottom plate 59 in a lower position during the following evacuation of the main chamber 56. The main chamber 56 of the vacuum bonding apparatus 60 is then evacuated via pump 55. The pressure in the bottom chamber 58 is then increased to a certain level via pump 57 thereby pushing the die-cut laminate against the base member 1. Then the bottom plate 59 is driven to the lower position by evacuating the bottom pressure chamber 58. After pressurizing the main chamber 56 of the vacuum bonding apparatus 60 to atmospheric pressure, the optical storage medium according to Fig. 1a of the present invention can be removed from the vacuum bonding apparatus 60. The releasable protective film 7 is removed to give a specific embodiment of an optical storage medium according to the present invention according to Fig. 1a.

In an alternative method of preparing an optical recording medium according to Fig. 1a, the pressure-sensitive adhesive layer 4 is laminated to the information storage layer 3 formed on the pits exhibiting surface 2 of the base member 1. The pressure-sensitive adhesive layer can be supplied, for example, as die-cut having the shape of the base member. The pressure-sensitive adhesive layer is preferably attached near one edge of the base member and then progressively laminated across the surface of the base member, applying a lamination angle of, for example, 45° or less in order to avoid entrapment of air bubbles. The release liner is removed from the pressure-sensitive adhesive layer and the base member bearing the pressure-sensitive adhesive layer can be attached to bottom plate 59 of the vacuum bonding apparatus 60 of Fig. 5. A laminate comprising a releasable protective film and a light-transmissive cover film is applied to the top plate. The optical recording medium is then prepared by pressurizing the bottom chamber 58 thereby pushing the bottom plate 59 to the top plate 54 as was described above.

In another method of preparing an optical recording medium according to Fig. 1a, a laminate comprising a releasable protective film 2, a light-transmissive cover film 5 and an exposed pressure-sensitive adhesive layer 4 is bonded to the exposed surface of the information storage layer 3 of the disc-shaped base member 1 by means of a wheel-bonding device disclosed in WO 99/54,116 (incorporated herein by reference). The wheel-bonding process which is described in some detail below in Example 3, ensures a bonding almost free of air inclusions as well as a good flatness of the laminated optical storage media.

The method as described above is only exemplary and restricts by no means the scope of the present invention.

Test methods

*Surface roughness of pressure-sensitive adhesive layer*

Surface roughness of pressure-sensitive adhesive layers was measured using a laser profilometer, available from UBM Messtechnik GmbH, Ettlingen, Germany, as Model Number UB-16. The instrument incorporates software which calculated the surface roughness as peak-to-valley height of the surface according to DIN 4768. The average surface roughness $R_z$ recorded in micrometers ($\mu$m) is defined as the average peak-to-valley height value of several individual measurement areas determined according to DIN 4762.

Each pressure-sensitive adhesive layer had a first and a second major surface, each of which was protected by a release liner prior to evaluation for surface roughness. Each of the two release liners was either the same or different with respect to roughness and/or release coating. Each light-transmissive cover film had a first and a second major surface which were obtained unprotected from the manufacturer.

The surfaces to be evaluated were always sputtered with gold twice before evaluation using a sputter coater, available as Balzers Model SCD 050 from Pfeifer Hochvacuum GmbH in Wiesbaden, Germany. The first sputtering was conducted with the target gold surface parallel to the adhesive layer for 60 sec with a current of 60 milliamps (mA). The second sputtering was conducted with the gold target at an angle of 30 degrees out of parallel for 60 sec with a current of 60 mA.

*Visual inspection of surfaces by scanning electron microscopy and light microscopy, respectively*

A scanning electron microscope, available from JEOL, Tokyo, Japan, as model JSM-5400 was used to provide micrographs of surfaces of release liners, pressure-sensitive adhesive layers, releasable protective films and light-transmissive cover films. A light microscope purchased from Reichert-Jung, Bensheim, Germany (now Leica Mikroskopie und Systeme GmbH, Wetzlar, Germany), as model Polyvar MET was used to provide microphotographs of surfaces of release liners, releasable protective films, light-transmissive cover films and movable belts used for casting pressure-sensitive adhesive layers and light-transmissive cover films, respectively. Light microscopy photomicrographs were taken using the dark field incident light mode.

*Flatness measurement*

The thickness variation of the pressure-sensitive adhesive layer, the light-transmissive cover film and the laminate comprising the pressure-sensitive adhesive layer and the light-transmissive cover film, respectively, was measured using at least one of the following devices:

(i) the DVD tester Biref 126 S DVD commercially available from Dr. Schenk GmbH, Martinsried, Germany,

(ii) the DVD tester ETA-DVD 80 commercially available from STEAG HamaTech AG, Sternenfeld, Germany, and

(iii) the capacitive thickness gauge Profiler 140 E commercially available from Modern Control, Minneapolis, MN, U. S. A.

The measurements of the flatness of the pressure-sensitive adhesive layer with (i) or (ii), respectively, were performed by laminating the pressure-sensitive adhesive layer between two disc-shaped polycarbonate substrates with smooth surfaces having a diameter of 12 cm, a thickness of 0.6 mm and a center hole with a diameter of 15 mm. The inner surface of one of the substrates had an aluminum coating and the inner surface of the other substrate had a semitransparent coating of silicon carbide (SiC). The thickness was measured with the Biref 126 S DVD tester (i) or the ETA-DVD tester (ii), respectively, point-by-point. The Biref tester had a maximum resolution in radial direction of 1 mm and in tangential direction of 2 mm. The thickness resolution is within the range of 1 μm. The ETA-DVD tester had a maximum resolution in radial direction of 0.1 mm and in tangential direction of 0.1 mm, the thickness resolution is 0.1 μm within the range of 25 - 120 μm.

The flatness of the light-transmissive cover film was measured using capacitive thickness gauge Profiler 140 E (iii). The thickness resolution was 0.01 μm and the test speed was 1 cm/sec.

The flatness of the sum of the thickness of the light-transmissive cover film and the pressure-sensitive adhesive layer in the assembled optical storage medium was performed using the ETA-DVD tester (ii). A compact disc-shaped base member bearing a reflective aluminum layer was laminated with a pressure-sensitive adhesive layer 4 and a light-transmissive cover film 5 in the vacuum bonding apparatus 60. The bonded disc comprising a 0.2 mm thick base member, a reflective aluminum layer, a pressure-sensitive adhesive layer, a light-transmissive cover film and a releasable protective film was mounted on the ETA-DVD tester after removal of the releasable protective film. The ETA-DVD tester consists of a turntable onto which the disc is mounted, a laser/sensor system and the measuring computer unit.

*180° peel adhesion of releasable protective films from light-transmissive cover films*

A sample of the respective releasable protective film was laminated to the Pokalon OG 46 GL polycarbonate light-transmissive cover film with a thickness of 75 μm with a rubber roller of 1 kg by applying hand pressure. The laminates were stored for 2 hours at room temperature and then oven aged for 1 hour at 60°C. 1 inch (2.54 cm) wide test specimens were cut and the exposed polycarbonate surface of the laminate was bonded onto an aluminum substrate with a double-coated pressure-sensitive adhesive tape commercially available as Tape # 444 from Minnesota Mining and Manufacturing Company ("3M"), St. Paul, MN, USA. One end of the exposed surface of the respective releasable protective film which is facing up was lifted off and wrapped with a piece of a masking pressure-sensitive adhesive tape which is available from 3M Company. The set-up was stored for 24 hours at room temperature. Then the aluminum plate was fixed in the lower clamp and the masking tape was fixed in the upper clamp of a standard tensile test equipment. A 100 N force gauge was used. The peel test speed was 150 mm/min.

*Vertical birefringence of light-transmissive cover film*

Equipment used:

Microscope:

A Leitz Ortholux II Pol microscope purchased from Ernst Leitz Wetzlar GmbH, Wetzlar, Germany (now Leica Mikroskopie und Systeme GmbH, Wetzlar, Germany), was used. This microscope was equipped with a 40X/0.85NA strain free objective and a full-wave compensating plate. The microscope was also equipped with a Bertrand lens for conoscopic viewing.

Polarization Analyzer:

RPA2000 Polarization Analyzer equipped with the RW or rotating waveplate option and a 435 nm interference filter. The instrument is manufactured by Instrument Systems GmbH, Neumarkter Str. 83, 81673 Munich, Germany

Procedure of measurement:

The procedure consists of 3 distinct steps:

1) determination of the orientation of the minimum and maximum refractive index directions in the plane of the light-transmissive cover film.
2) measurement of the Mueller matrix for light propagating through the light-transmissive cover film along a path 45 degrees to the plane of light-transmissive cover film.
3) calculation of the vertical birefringence from the Mueller matrix .

ad 1)

A sample of the light-transmissive cover film is placed on the microscope stage and brought into good focus using the 40X objective. Using conoscopic viewing it is verified that the light-transmissive cover film has 3 principal refractive indices: 2 very nearly equal refractive indices which are perpendicular to one another but in the plane of the film and a third refractive index perpendicular to the plane of the film. This can be confirmed by observing that the interference figure remains centered as the stage is rotated. If the interference figure remains well centered then the directions of the principal refractive indices in the plane of the film are determined.

ad 2)

The RPA2000 Polarization Analyzer is set up so that the plane of the rotating table is perpendicular to the light path between the polarization state generator and the polarization state analyzer. The sample of the light-transmissive cover film is placed on a holder that was constructed to insure that the light beam used to analyze the film passes through the film at 45 degrees to the plane of the light-transmissive cover film. Additionally, the high refractive index direction in the plane of the light-transmissive cover film is oriented to be perpendicular to the light beam. The sample holder is then placed on the rotating table of the RPA2000 Polarization Anaylzer. The Mueller matrix is then measured for the film in this specific orientation. If the non-diagonal elements of the matrix are significantly different from zero then the table is rotated to minimize these terms and the Mueller matrix is re-measured.

ad 3)

The retardation of the light as it travels through the light-transmissive cover film at 45 degrees is calculated based on the equations given in "Polarized Light: fundamentals and applications", Edward Collet, M. Dekker, New York 1993, p. 581. Then the path length of the light through the light-transmissive cover film is obtained from the following equation:

Path length =

thickness of the film / (cos ( arcsin( 45/ nominal refractive index)))

using the average in-plane refractive index as the nominal refractive index.

The birefringence at 45 degrees is the retardation at 45 degrees divided by the path length. Because the in-plane refractive index is known, the refractive index at 45 degrees can be calculated.

The final calculation uses the equation for the length of a radial line in an ellipse to calculate the refractive index perpendicular to the plane of the film. The long axis of the ellipse is the refractive index in the plane of the film and the length of the radial line at 45 degrees is the refractive index calculated above. This allows the calculation of the unknown short axis of the ellipse or the refractive index perpendicular to the plane of the film.

The vertical birefringence is obtained as the difference between the in-plane refractive index and the refractive index perpendicular to the plane of the light-transmissive cover film.

The values of vertical birefringence were measured at 20 °C and at a wavelength of 435 nm.

*In-plane retardation of light-transmissive cover film*

Sample preparation: samples of the light-transmissive cover films to be evaluated were mounted with double-coated adhesive tape over cut-out sections of a CD disc blank which acted as a sample holder.

Measurements were made on commercial equipment suited to evaluating properties of optical recording media, available from Dr. Schenk GmbH, Martinsried, Germany, as Model "Prometheus MT 136". The measurement mode "relative birefringence" was selected.

A graph was generated giving relative birefringence (T) in nm (Y-axis) vs. measurement angle in degrees (X-axis). The resulting graph showed sections where the instrument was observing the sample holder. These portions were disregarded. The remaining signal appeared in shapes varying from near flat to a sinusoidal wave form.

Two measurements were made in each sample section, as 35 mm and 40 mm radius from the center of the disc, respectively. Another measurement was made at 64 mm which corresponds to a position outside the area of the disc where only air was observed. This served as a reference or control number.

The minimum and maximum values from the curve were taken and then averaged. Both the average and the deviation from that average are recorded.

Because the disc rotates, information is generated on the light-transmissive cover film's properties in several directions. One can observe the cross-web and down-web directions of the light-transmissive cover films and the influence on the birefringence.

*Transmission $I_1/I_0$ of light-transmissive cover film (by optical bench method)* A monochromatic lamp (laser or polychromatic lamp with interference filter), a focusing device, a polarizing filter, sample holder, a second polarizing filter and a detector were mounted in line on an optical bench. The sample holder was mounted such that the sample of the light-transmissive cover film was held at an angle for 45° to the light path and could be rotated round its own axis (the axis perpendicular to the surface of the light-transmissive cover film).

Two measurements were made:

1. The two polarizers were adjusted to be 90° out of phase so that a minimum of light passed through. The light-transmissive film was placed in the light path and rotated until the minimum of light passed through it (maximum extinction). The second polarizer was then adjusted to be in phase with the first polarizer. The intensity of light, $I_0$, was then measured and recorded.

2. The sample light-transmissive cover film was then rotated 45° around its own axis. The second polarizer was placed out of phase with the first polarizer. As second intensity, $I_1$, was then measured and recorded.

3. The ratio of $I_1/I_0$ was then calculated. This ratio gives an indication of the amount of light which is blocked out when polarized light is passed through the light-transmissive cover film. The intensity $I_1$ varies roughly in proportion to the retardation.

*Transmission of light-transmissive cover film (with UV-VIS Spectrophotomer)*

Transmission of light-transmissive cover films at various wavelengths was measured using a Perkin-Elmer Model 550 SE UV-VIS Spectrophotometer, available from Perkin-Elmer, Uebelingen, Germany. Air was used as a reference. The light-transmissive cover films were scanned at 60 nm per minute. Results were recorded in % transmission as a function of wavelength.

*Thickness of the light-transmissive cover film*

Thickness of the light-transmissive cover films was measured using an instrument specially suited to testing of optical recording media, available commercially as Eta-DVD80 Tester from Eta Optik GmbH, Heinsberg, Germany. The sample holder described above under In-plane retardation was employed. Measurements were made at a radius of 37.5 mm from the disc center. Three hundred (300) values per circle were measured. This reflects the maximum resolution which could be measured using this instrument.

A graph was generated showing thickness in microns vs. angle. The instrument calculates a minimum, a maximum, an average and a variation. These calculated values could not be utilized in a few instances because of periodic interference from the sample holder. In these cases values were taken from the curves manually.

*Micro-roughness and wave-like roughness of the light-transmissive cover film*

Samples of the light-transmissive cover films were held in a circular film-tensioning device designed to hold the film flat during measurement. Micro-roughness was then measured on the surface of the light-transmissive cover films using a UBM Laser Profilometer Mikrofocus Compact available from UBM Messtechnik GmbH, Ettlingen, Germany.

A distance of 10 mm of film surface was evaluated with 1000 data points per mm for a total of 10,000 data points. A graph was generated showing roughness in microns vs. distance over the 10 mm range (0 - 10 mm). The micro-roughness was estimated visually by measuring the width of the generated line. A wave-like function could be observed over a distance of several mm as well. The difference between the trough and the crest of a wave was measured and recorded.

Examples

*Example 1*

A solvent cast polycarbonate film with a thickness of 75 $\mu$m was provided as a polycarbonate light-transmissive cover film available under the trade designation "Pokalon OG46 GL" from Lonza, Weil/Rhein, Switzerland. The flatness of the film was qualitatively assessed by means of light microscopy, using a magnification of 600x Photomicrographs which were taken from the two major surfaces of the Pokalon OG46 GL film, show very smooth surfaces which are basically free of flaws. The surface roughness $R_z$ was approximately < 0.1 $\mu$m. The thickness variation as measured with the 140 E Profiler was 0.32 $\mu$m over an arbitrarily selected distance of 25 mm in cross direction and 0.05 $\mu$m over an arbitrarily selected distance of 25 mm in machine direction.

A suitable piece of the light-transmissive protective film (approximately 60 cm x 30 cm) was placed on a smooth PVC surface. A pressure-sensitive adhesive layer (no carrier layer but pure adhesive layer) was then provided as optically clear laminating pressure-sensitive adhesive transfer film # 8142 which is available from 3M Company. The pressure-sensitive adhesive layer was protected by two essentially smooth polyester release liners (surface roughness $R_z$ of the release liner less than 2 $\mu$m). The thickness of the # 8142 pressure-sensitive adhesive layer was 50 $\mu$m with a thickness variation of $\pm$ 2 $\mu$m as measured with the Biref 126 S DVD tester. The # 8142 pressure-sensitive adhesive layer further had a refractive index of 1.475, a surface roughness of approximately 0.5 $\mu$m on each surface and a cleanliness of such as to meet class 1000 clean-room requirements.

A suitable piece of the # 8142 pressure-sensitive adhesive layer which was greater than the size of the light-transmissive cover film was then provided with two adhesive tape tabs adhered to the release liner and extending past the perimeter of the linered pressure-sensitive adhesive sheet to aid in removal of the release liners without contaminating the pressure-sensitive adhesive layer. After removal of the low release liner, the # 8142 pressure-sensitive adhesive layer was laminated with its exposed surface onto the Pokalon OG46 GL polycarbonate film. The adhesive face was placed near one edge of the polycarbonate film and pressed onto the exposed surface of the polycarbonate film from one edge to the other using a rubber lamination roller with a mass of 1 kg with hand pressure, in such a manner that the exposed adhesive surface on the release liner was fed under the lamination roller while being bent backwards over the roller so that the release liner made an angle of approximately 45° or less with itself. The exposed surface of the flexible pressure-sensitive adhesive layer on the release liner was thus applied to the exposed surface of the polycarbonate film in such a manner as to prevent the entrapment of air bubbles at the interface between these surfaces. The resulting laminate was then flipped so that the exposed release liner surface was placed on the stainless steel substrate and a surface of the polycarbonate film was exposed.

Then an adhesive tape having serial number 2104 C, comprising a backing and bearing a low-release pressure-sensitive adhesive layer, available from 3M Company, was provided as releasable protective film. A suitable piece of the releasable protective film which was greater than the size of the polycarbonate film was laminated with its pressure-sensitive adhesive layer onto the exposed polycarbonate film using a rubber lamination roller with a mass of 1 kg with hand pressure.

Then a disc-shaped base member suitable for preparing a DVR disc with a recording capacity of 8 GB, comprising a disc-shaped polycarbonate substrate having an outer diameter of 120 mm, a thickness of 1.2 mm and a central hole with a diameter of 15 mm, was prepared by forming a master disc and subsequent injection moulding following the procedure described in EP 0,729,141, col. 6, Ins. 14 - 46. The disc-shaped base member had a first flat major surface and a second major surface opposite to the first one which bore pits created by injection moulding. An approximately 50 nm thick aluminum layer was applied on the structure of pits on the second major surface by means of sputtering as is disclosed in EP 0,729,141, col. 6, Ins. 47 - 55.

Then a polyamide plate coated with a silicon-urea release coating exhibiting an indent suitable for fixing the disc-shaped DVR base member during subsequent lamination, was provided. After removal of the polyester release liner from the laminate comprising the releasable protective layer, the light-transmissive cover film, the pressure-sensitive adhesive layer and the polyester release liner and placing of the DVR base member into the indent with the information storage layer facing up, the exposed pressure-sensitive adhesive layer of the laminate is placed near one edge of the DVR base member and pressed onto the exposed information storage layer progressively from one edge to the other using a rubber lamination roller with a mass of 1 kg with hand pressure under a lamination angle of approximately 45° or less as was described above.

The resulting DVR disc is then flipped so that the releasable protective film is placed on the polyamide substrate, and the inner and outer edges of the laminate adhered to the information storage layer of the base member are cut with a scalpel along the outer and inner periphery of the base member.

The resulting DVR disc was flipped and an adhesive tape tab was attached to the exposed surface of the releasable protective layer to aid in the removal of the releasable protective layer.

The combination of the light-transmissive cover film and the pressure-sensitive adhesive layer in the DVR disc obtained was tested for flatness using the ETA-DVD 80 DVD tester as is described above. The above two layers had an average thickness of 102.8 µm with a minimum thickness value of 102.2 µm, a maximum thickness value of 103.4 µm and a standard deviation of 0.3 µm.

The DVR disc obtained was furthermore tested for flatness measuring the radial and tangential tilt of the laser beam of the Biref 126 S DVD tester when it is reflected from the information storage layer of the disc. The optical retardation of the DVR disc was ± 25 nm.

*Comparative example 1*

A 50 µm thick cellulose triacetate film to be used as a light-transmissive cover film was obtained as Triphan P91GL from Lonza, Weil/Rhein, Switzerland. Microscopical analysis of the film with Reichert-Jung light microscope Polyvar MET showed that the film exhibited small particles extending over the surface of the film. The small particles are agglomerates of an antiblocking agent required for production and handling of the Triphan P91GL film. Since the small particles would have acted as scattering centers, the Triphan P91GL film was not used for the preparation of DVR discs.

*Example 2*

Example 1 was repeated with the difference that optically clear laminating pressure-sensitive adhesive # 8141 which is available from 3M Company, was used as pressure-sensitive adhesive layer. The # 8141 pressure-sensitive adhesive layer was protected by two essentially smooth polyester release liners (surface roughness $R_z$ of the release liners less than 2 µm) and had a thickness of 25 µm ± 1.5 µm as measured with the Biref 126 S DVD tester.

The example was repeated three times and the results of the measurements are summarized in table 1.

Table 1

| Run | Minimum thickness [µm] | Maximum thickness [µm] | Average thickness [µm] | Standard deviation of thickness [µm] |
|---|---|---|---|---|
| 1 | 101.6 | 103.2 | - | - |
| 2 | 101.3 | 102.4 | - | - |
| 3 | 102.2 | 103.4 | 102.8 | 0.3 |

*Example 3*

Example 2 was repeated with the difference that bonding of the laminate comprising the releasable protective film, the light-transmissive cover film and the exposed pressure-sensitive adhesive layer to the exposed surface of the Information storage layer of the disc-shaped base member was performed by means of a wheel-bonding device which is disclosed in the co-pending US patent US 6,066,218 of the present applicant. The disc-shaped base member bearing the information storage layer as well as the laminate comprising the releasable protective film, the light-transmissive cover film and the exposed pressure-sensitive adhesive layer are mounted on two slightly curved surfaces. The curvature of these surfaces corresponds to the outer curvature of rolls with a diameter of at least 1.2 m. The information storage layer of the disc-shaped base member and the pressure-sensitive adhesive layer of the laminate are now put in contact by counter-rotation of the curved surfaces and by means of a certain pressure. The process is done in a way which ensures that the still unbonded area of the disc-shaped base member bearing the information storage layer as well as the unbonded area of the laminate comprising the releasable protective film, the light-transmissive cover film and the exposed pressure-sensitive adhesive layer, respectively, maintain contact to the curved surfaces, whereas the already bonded area releases from the respective curved surface.

The radial and tangential, respectively, tilt of a vertically incident laser beam was measured with the Biref 126 S DVD tester for the disc-shaped base member comprising the Information storage layer prior to laminating the above laminate of pressure-sensitive adhesive layer/Pokalon OG46GL polycarbonate film/# 8141 pressure-sensitive adhesive layer and for the resulting optical recording medium disc after such lamination with the wheel-bonding device. The example was repeated fourteen times and the results are summarized in table 2.

It is evident from table 2 that the average value of the span of the radial tilt amounts to $0.50 \pm 0.10°$ prior to lamination and that this value is only slightly increased to $0.58 \pm 0,15°$ after lamination. Likewise, the average value of the span of the tangential tilt is $0.35 \pm 0.06°$ prior to lamination, and the corresponding value after lamination is $0.43 \pm 0.09°$. This shows that the method of wheel-bonding disclosed in US 6,066,218 results in a small and acceptable deterioration of the flatness of the optical recording medium only.

EP 1 173 795 B1

Table 2

| Run | Base member with information storage layer (prior to lamination) | | | | | | DVR disc (after lamination) | | | | | |
|---|---|---|---|---|---|---|---|---|---|---|---|---|
| | min. radial tilt [°] | max. radial tilt [°] | span [°] | min. tangential tilt [°] | max. tangential tilt [°] | span [°] | min. radial tilt [°] | max. radial tilt [°] | span [°] | min. tangential tilt [°] | max. tangential tilt [°] | span [°] |
| 1 | - 0.41 | - 0.04 | 0.37 | - 0.09 | 0.2 | 0.29 | - 0.24 | 0.41 | 0.65 | - 0.22 | 0.2 | 0.42 |
| 2 | - 0.38 | 0.15 | 0.53 | - 0.22 | 0.19 | 0.41 | - 0.2 | 0.21 | 0.41 | - 0.14 | 0.2 | 0.34 |
| 3 | - 0.4 | 0.1 | 0.5 | - 0.29 | 0.16 | 0.45 | - 0.19 | 0.08 | 0.27 | -0.08 | 0.15 | 0.23 |
| 4 | - 0.3 | 0.15 | 0.45 | - 0.1 | 0.13 | 0.23 | - 0.27 | 0.17 | 0.44 | - 0.26 | 0.2 | 0.46 |
| 5 | - 0.39 | 0.14 | 0.53 | - 0.16 | 0.21 | 0.37 | - 0.35 | 0.26 | 0.61 | - 0.16 | 0.18 | 0.34 |
| 6 | - 0.22 | 0.11 | 0.33 | - 0.16 | 0.17 | 0.33 | - 0.09 | 0.33 | 0.42 | - 0.17 | 0.24 | 0.41 |
| 7 | - 0.27 | 0.24 | 0.51 | - 0.01 | 0.28 | 0.27 | - 0.14 | 0.41 | 0.55 | - 0.22 | 0.16 | 0.38 |
| 8 | - 0.2 | 0.25 | 0.45 | - 0.16 | 0.19 | 0.35 | - 0.17 | 0.38 | 0.55 | - 0.17 | 0.26 | 0.43 |
| 9 | - 0.28 | 0.33 | 0.61 | - 0.19 | 0.2 | 0.39 | - 0.28 | 0.4 | 0.68 | - 0.14 | 0.22 | 0.36 |
| 10 | - 0.45 | 0.27 | 0.72 | - 0.22 | 0.22 | 0.44 | - 0.33 | 0.45 | 0.78 | - 0.28 | 0.27 | 0.55 |
| 11 | - 0.3 | 0.13 | 0.43 | - 0.15 | 0.24 | 0.39 | - 0.21 | 0.39 | 0.6 | - 0.21 | 0.32 | 0.53 |
| 12 | - 0.3 | 0.22 | 0.52 | - 0.15 | 0.15 | 0.3 | - 0.2 | 0.4 | 0.6 | - 0.24 | 0.23 | 0.47 |
| 13 | - 0.31 | 0.28 | 0.59 | - 0.14 | 0.23 | 0.37 | - 0.17 | 0.67 | 0.84 | - 0.29 | 0.26 | 0.55 |
| 14 | - 0.21 | 0.19 | 0.4 | - 0.12 | 0.16 | 0.28 | - 0.15 | 0.55 | 0.7 | - 0.29 | 0.24 | 0.53 |
| Mean: | - 0.32 | 0.18 | 0.50 | - 0.15 | 0.20 | 0.35 | - 0.21 | 0.37 | 0.58 | - 0.21 | 0.22 | 0.43 |
| Std. Dev. | - 0.08 | 0.09 | 0.10 | 0.07 | 0.04 | 0.06 | 0.07 | 0.15 | 0.15 | 0.06 | 0.04 | 0.09 |

*Example 4*

The following releasable protective films were provided:

a) A two-layer releasable protective film comprising a first layer of a polymer mixture of 50 wt. % of polypropylene PPC 8750 (commercially available from Fina Deutschland GmbH, Bleichstr. 2 - 4, D-60313 Frankfurt, Germany), and 50 wt. % of low density polyethylene LD 0304 (commercially available from ELF Atochem Deutschland GmbH, Tersteegenstr. 28, D-40401 Duesseldorf, Germany) with a thickness of 50 µm and a second layer of EVA copolymer Evatane 2803 (commercially available from ELF Atochem Deutschland GmbH, with a thickness of 26 µm, was obtained by coextrusion as is described in some detail in example 1. The releasable protective film exhibited a matte surface of the PPC 8750/LD 0304 polymer layer and a smooth self-adhering surface of the Evatane.

b) A two-layer releasable protective film comprising a first layer of low density polyethylene LD 0304 with a thickness of 50 µm and a second layer of EVA copolymer Evatane 2803 was obtained by coextrusion following the procedure applied above in a). The releasable protective film exhibited a smooth surface of the LD 0304 layer and a smooth self-adhering surface of the Evatane 2803 layer.

c) A releasable protective laminate film comprising two polymer layers with one of them exhibiting self-adhering properties available under the trade designation "GH-X 173" was obtained from Bischof & Klein, Lengerich, Germany. The film had a thickness of 50 µm and was smooth on both major surfaces.

d) A releasable protective film comprising a backing and bearing a low-release pressure-sensitive adhesive layer, was obtained from 3M Company as adhesive tape # 2104 C. The backing exhibited a smooth exposed surface.

e) A releasable protective film comprising a backing bearing a low-release pressure-sensitive adhesive, was obtained from Nitto Deutschland GmbH, Am Sandbach 32, D-40878 Ratingen, Germany, as adhesive tape 5057 A5. The backing exhibited a smooth exposed surface.

The 180° peel adhesion of each of the releasable protective films from the Pokalon OG46 GL polycarbonate film was measured as is described above. The results of the measurements are summarized in table 3.

Table 3

| 180° peel force [cN/2.54 cm] | | | | | | |
|---|---|---|---|---|---|---|
| | Peeling in direction of lamination of releasable protective film to polycarbonate film | | | Peeling perpendicular to direction of lamination of releasable protective film to polycarbonate film | | |
| Releasable protective film | No. of measure ments | Average value | Stand. dev. | No. of measure ments | Average value | Stand. dev. |
| a | 10 | 9.01 | 2.7 | 6 | 6.6 | 0.6 |
| b | 4 | 12.51 | 7.6 | - | - | - |
| c | 4 | 8.0 | 6.0 | 6 | 4.9 | 0.7 |
| d | 4 | 46.4 | 10.4 | - | - | - |
| e | 4. | 102.9 | 16.7 | - | - | - |

*Example 5*

APEC 9331 (Bayer AG), a polycarbonate polymer comprising 90% by weight bisphenol A and 10% by weight 1,1-bis(4-hydroxyphenyl)-3,3,5-trimethyl cyclohexane (TMC), was dissolved in methylene chloride and cast onto a smooth stainless steel belt and then dried down to 15% residual solvent. The film was removed from the belt and passed through a forced air oven (ca. 80-100° C) until the residual solvent in the film was less than 1% by weight.

The resulting light-transmissive cover film had a thickness of 77 microns. The film was obtained from Lofo High Tech Film GmbH, Weil am Rhein, Germany.

The light-transmissive cover film was evaluated according to the Test methods given above. Transmission using a UV-VIS spectrophotometer shown showed 87.7 % transmission at a wavelength of 370 nm, 88.9 % transmission at 400 nm and 90.0 % transmission at 600 nm.

Other test results are shown in Tables 4-5.

The light-transmissive cover film prepared above was laminated to a releasable protective film designed to protect the light-transmissive cover film from scratches and contamination with dust during subsequent manufacture of digital versatile discs. The releasable protective film was multilayer polyolefin-based sheet, having a thickness of 50 microns, available as GH- X 173 from Bischof and Klein GmbH, Lengerich, Germany. Lamination was performed using a film laminator at 23° C.

A 25 micron thick layer of acrylic pressure-sensitive adhesive between two 50 micron thick siliconized polyester release liners was obtained commercially as Optically Clear Adhesive 8141 from 3M Company, St. Paul, MN/ USA. Circular sections of adhesive were cut out in circles having a diameter of ca. 120 mm.

The circular adhesive sections were supported on a continuous strip of liner from the bottom. Each circular adhesive section was protected by a same-sized-circular section of liner from above. Each circular adhesive /liner section had a centered hole of 15 mm.

The following process was used to bond a base member bearing an information storing layer on its surface, and the light-transmissive cover film bearing the releasable protective film as prepared above. The bonding apparatus used which is schematically shown in Fig. 5, was located in a clean room class 100 environment. The following description refers to the apparatus of Fig. 5 and the referal numbers used therein whereby the two disc halves shown in Fig. 5 have to be disregarded for the purpose of the following description. Introduction of the DVR components into the apparatus of Fig. 5 and bonding of such components was performed as follows:

1. The base member 1 was attached to the vacuum plate holder of top plate 54 of the bonding apparatus of Fig. 5 and held by vacuum with the information storage layer pointing downwards.
2. The pressure-sensitive adhesive layer 4 (after removal of one release liner) was put on the vacuum plate holder 53 of bottom plate 59 with the remaining release liner facing downwards, and centred.
3. The main vacuum chamber 56 was closed.
4. The main chamber 56 was evacuated until a vacuum of 0.08 mbar was reached.
5. The bottom plate 59 was raised to bond the pressure-sensitive adhesive layer 4 to the information storage layer 3 of the base member 1.
6. The vacuum plate holder 53 of the bottom plate 59 was ventilated and the bottom plate 59 was lowered.
7. The main vacuum chamber 56 was ventilated and then opened.
8. The bonded construction (base member 1/information storage layer 3/pressure-sensitive adhesive layer 4/release liner) remained attached to the top plate 54 held by its vacuum plate holder.
9. The release liner was removed from the pressure-sensitive adhesive layer 4.
10. The die-cut laminate of the light-transmissive cover layer 5 and the protective film 7 was put on the vacuum plate holder 53 of bottom plate 59 with the releasable protective film facing downwards, and centered.
11. The main vacuum chamber 56 was closed.
12. The main chamber 56 was evacuated until a vacuum of 0.08 mbar was reached.
13. The bottom plate was raised and the light-transmissive cover film 5 was adhered to the pressure-sensitive adhesive layer 4, thus forming an optical storage medium.
14. The vacuum plate holder of the top plate 54 was ventilated.
15. The bottom plate 59 was lowered.
17. The main vacuum chamber 56 was ventilated.
18. The main chamber 56 was opened.

To evaluate the performance of the finished optical storage medium, the releasable protective film was removed. The optical storage medium obtained exhibited advantageous optical properties, a low thickness variation, low jitter values and a high transmission with respect to linearly polarized light.

*Example 6*

The preparation of the light-transmissive cover film of Example 5 was repeated with the exception that the transparent polycarbonate film had a thickness of 97 microns.

Table 4

|  | Polymer tradename | Wt. % TMC |
|---|---|---|
| Ex. 5 | APEC 9331 | 10 |
| Ex. 6 | APEC 9331 | 10 |

Table 5

|  | Film thickness, microns +/- | Vertical Biref., | In-plane retardation, nm, +/- | Micro-roughness, nm | Wave-like roughness, nm |
|---|---|---|---|---|---|
| Ex. 5 | 77.0, +/-0.6 | 0.000660 | -1, +/- 9 | 60 | 800 |
| Ex. 6 | 97.2, +/-1.1 | 0.000508 | -1, +/- 7 | 60 | 400 |

*Comparative examples 2-3*

The light-transmissive cover films of Comparative Examples 2-3 were prepared by dissolving the polycarbonate polymers, respectively, in methylene chloride and casting them onto a glass plate using a knife coater. The films were dried slowly in a forced air oven in at a temperature of ca. 80° C so as to prevent formation of bubbles or surface irregularities. Film thickness was approximately 75 microns. Polymer and film tradenames are shown in Table 6. The films were obtained from Lofo High Tech Film GmbH, Weil am Rhein, Germany.

Vertical birefringence of the resulting films was measured by the method described under <u>Test methods</u>. Results are shown in Table 7 below. It can be seen from a comparison of Examples 5 and 6 with Comparative examples 2-3 that lower amounts of TMC in the polycarbonate tend to result in lower values of birefringence.

Table 6

| Exam. | Polymer tradename | Film tradename | Wt. % TMC |
|---|---|---|---|
| C2 | APEC™ 9340 | POKOLON™ UK 180-3 | 22 |
| C3 | APEC™ 9203 | POKOLON™ UK 180-1 | 55 |

Table 7

| Exam. | Film thickness, microns +/- | Transmission $(I_1/I_0)$ | Vertical biref. | Inplane retard., nm, +/- | Micro-roughness, nm | Wave-like roughness, nm |
|---|---|---|---|---|---|---|
| C2 | 72.8, +/-2.7 | 0.2247 | 0.00308 4 | -5, +/-1 | 60 | 200 |
| C3 | 77.7, +/-3.5 | 0.4367 | 0.00283 7 | -6, +/-2 | 60 | 60 |

*Examples 7-8*

A transparent polycarbonate film bearing a protective film was obtained as PUREACE from Teijin, Osaka, Japan. The film which was obtained in thicknesses of 102 microns and 70 microns, respectively, was evaluated as a light-transmissive cover film for use in the present invention. Vertical birefringence was measured as shown in Table 9 below.

Transmission measurements using a UV-VIS spectrophotometer was performed on Example 7 and showed 88.9 % transmission at a wavelength of 370 nm, 89.4 % transmission at 400 nm and 90.0 % transmission at 600 nm.

The 70 micron and 102 microns films, respectively, were laminated to a pressure-sensitive adhesive layer 4 and then bonded to the surface of a base member bearing an information storage layer, as is described in Example 5.

*Example 9*

A polyolefin-based transparent film was obtained from Lofo High Tech Film GmbH, Weil am Rhein, Germany, as TRANSPHAN™ OG 652GL. The film had a thickness of 98 microns and comprised a terpolymer of norbornene, dicyclopentadiene and methyl methacrylate. Such film was evaluated as a light-transmissive cover film for use in the present invention.

Vertical birefringence, thickness, transmission and roughness of the films were measured. Results are summarized in Table 9.

The films were laminated to a pressure-sensitive adhesive layer and then bonded to the surface of a base member bearing an information storage layer, as is described in Example 1.

Table 8

| Exam. | Polymer type | Film tradename |
|---|---|---|
| 7 | Polycarbonate | PUREACE |
| 8 | Polycarbonate | PUREACE |
| 9 | Norbornene, cyclopentadiene, MMA | TRANSPHAN™ OG 652GL |

Table 9

| Exam. | Film thickness, microns +/- | Transmission $(I_1/I_0)$ | Vert. biref. | In-plane retardation, nm, +/- | Micro-roughness , nm | Wave-like roughness, nm |
|---|---|---|---|---|---|---|
| 7 | 71.0, +/-0.2 | -- | 0.000656 | -1, +/- 10 | 60 | 800 |
| 8 | 102.2, +/-0.6 | -- | 0.000417 | -1, +/- 8 | 400 | 600 |
| 9 | 97.6, +/-1.5 | 0.0016 | 0.000383 | -2, +/- 8 | 40 | 400 |

*Examples 10-13 and Comparative examples 4-5*

Light-transmissive cover films were prepared by the process described in Example 5. The films were provided by Lofo High Tech Film GmbH, Weil am Rhein, Germany.

Film composition is shown in Table 10 and physical and optical properties of the films are shown in Table 11.

The films were used to prepare optical storage media as described in Example 5.

Table 10

| Exam. | Polymer tradename | Film tradename | Wt. % TMC |
|---|---|---|---|
| 10 | MAKROLON™ 5730 | POKOLON™ OG 46 GL 03963674 | 0 |
| 11 | MAKROLON™ 5730 | POKOLON™ OG 46 GL | 0 |
| | | | |
| 12 | APEC™ 9201 | POKOLON™ HT | 10 |
| 13 | APEC™ 9351 | POKOLON™ OG 461 GL | 35 |
| C4 | APEC™ 9203 | POKOLON™ HT BV 411 | 55 |
| C5 | APEC™ 9203 | | 55 |

Table 11

| Exam. | Film thickness, microns +/- | Transmission $(I_1/I_0)$ | Vertical biref. | In-plane retard., nm, +/- | Micro-roughness, nm | Wave-like roughness, nm |
|---|---|---|---|---|---|---|
| 10 | 77.8, +/- 0.3 | 0.0099 | 0.000842 | -2, +/- 6 | 200 | 200 |
| 11 | 90.2, +/- 1.0 | 0.0092 | 0.000784 | -1, +/-11 | 400 | 1200 |
| | | | | | | |
| 12 | 78.8, +/- 1.2 | 0.0069 | 0.000669 | -3, +/-10 | 40 | 200 |
| 13 | 75.8, +/- 2.2 | 0.0167 | 0.000697 | -2, +/- 3 | 400 | 400 |

Table 11 (continued)

| Exam. | Film thickness, microns +/- | Transmission ($I_1/I_0$) | Vertical biref. | In-plane retard., nm, +/- | Micro-roughness, nm | Wave-like roughness, nm |
|---|---|---|---|---|---|---|
| C4 | 74.9, +/- 0.9 | --- | 0.001125 | -4, +/- 4 | 40 | 200 |
| C5 | 77.8, +/- 0.6 | --- | 0.001136 | 0, +/- 3 | 100 | 200 |
| | | | | | | |

*Example 14*

A isobornyl acrylate (IBOA) and GENOMER™ 1112 were combined in the amounts of 50 wt. % each with 0.05 parts by weight of photoinitiator based on 100 parts by weight monomer. Isobornyl acrylate (IBOA) is available from Osaka Chemical Company, Osaka, in Japan. GENOMER™ 1112, a monofunctional aliphatic urethane acrylate, is available from Rahn AG, Zuerich, Switzerland. IRGACURE™ 651 is 2,2-dimethoxy-1,2-diphenylethane-1-one and is available from Ciba-Geigy, Lautertal, Germany. The three-component mixture was purged with nitrogen and then partially polymerized using UV light until the mixture had a viscosity of ca. 1500 mPa.s.

A second portion of IRGACURE™ 651 photoinitiator was added to the syrup in the amount of 0.10 parts by weight based on 100 parts by weight of syrup. The partially polymerized syrup was first degassed and then coated between two transparent siliconized polyester films having a thickness of ca. 50 microns. The coating was performed using a knife coater and the syrup layer had a thickness of ca. 75 microns.

The construction thus prepared was passed under medium pressure UV lamps having about 90 % of the emissions between 300 and 400 nm, with a peak emission at 351 nm. The construction was irradiated with a total energy 103 mJ/cm$^2$. The polymerization was essentially completed during this radiation curing process.

The chemical composition of the resulting film is summarized in Table 12. The film was evaluated as a light-transmissive cover film for use in the present invention. Vertical birefringence, roughness and transmission were measured. The results are summarized in Table 13.

*Example 15*

A mixture of 27 wt. % isobornyl acrylate (IBOA), 73 wt. % ACTILANE™ 250 HD 25 and 0.10 parts based on 100 parts monomer were combined to form a mixture having a coatable viscosity of ca. 1700 mPa.s. ACTILANE™ 250 HD 25 is a mixture of 75 wt % trifunctional aliphatic urethane acrylate and 25 wt % hexanediol diacrylate (HDDA) and is available from Akcros Chemicals, Dueren, Germany. No prepolymerization was required to obtain a coatable viscosity.

The mixture was degassed and coated between two siliconized polyester sheets and polymerized using UV light as in Example 14. The resulting clear, non-tacky film was 75 microns thick.

The chemical composition of the resulting film is summarized in Table 12. The film was evaluated as a light-transmissive cover film for use in the present invention. Vertical birefringence, roughness and transmission were measured. The results are summarized in Table 13.

*Example 16*

A difunctional polyurethane methacrylate (I) was prepared by first placing 5.0 moles (1110 g) of isophorone diisocyanate (IPDI, NCO eq. wt. of 111) in a 5 liter, four-necked flask equipped with a thermometer, a mechanical stirrer, an inert gas inlet and a reflux condenser. Then 2.0 equivalents (2,126 g) of polycarbonatediol (OH eq. wt. of 1063, available as DESMOPHEN™ C 200 from Bayer, Leverkusen, Germany) was added to the flask in three portions, so as not to exceed a reaction temperature of 60° C. Two equivalents (1 mole) of butanediol were then added slowly in four portions and the resulting mixture was held at 50° C for 2 hours. The mixture was allowed to cool to 23° C and the isocyanate concentration of the mixture was measured by titration according to DIN (Deutsche Industrie Norm) 53 185. A calculated equimolar amount (with 10% excess) of 2-hydroxyethylmethacrylate (HEMA), corresponding to ca. 6.6 moles was added using a dropping funnel. The residual NCO in the resulting methacryloyl-functional polymer was measured by titration according to DIN 53 185 and was found to be less than 0.1%.

Isobornyl acrylate (IBOA) was combined with the difunctional polyurethane acrylate (I) prepared above in the amounts of 45.5 wt % and 54.5 wt %, respectively. Photoinitiator (IRGACURE™ 651) was added to the mixture in the amount of 0.10 parts by weight based on 100 parts by weight of monomers. The mixture thus formed had a coatable viscosity of ca. 2000 mPa.s.

The mixture was degassed, coated and cured as in Example 14 to form a clear, self-supporting film. The chemical composition of the resulting film is summarized in Table 12. The film was evaluated as a light-transmissive cover film for use in the present invention. Vertical birefringence, roughness and transmission were measured. The results are summarized in Table 13.

Table 12

|  | Monomer 1 | Monomer 2 | Photoinitiator |
|---|---|---|---|
| Ex. 14 | IBOA, 50.0 wt % | GENOMER™ 1122, 50.0 wt % | IRGACURE™ 651, 0.15% |
| Ex. 15 | IBOA, 27.0 wt. % | ACTILANE™ 250 HD 25, 73.0 wt % | IRGACURE™ 651, 0.10 % |
| Ex. 16 | IBOA, 45.5 wt % | Dimethacrylate (I) , 54.5 wt % | IRGACURE™ 651, 0.10 % |

Table 13

|  | Transmission at 370 nm, % | Transmission at 400 nm, % | Transmission at 600 nm, % | Vertical birefringence, | In-plane retardation, nm, +/- | Micro-roughness, nm |
|---|---|---|---|---|---|---|
| Ex. 14 | 87.8 | 89.4 | 90.0 | 0.000048 | ** | 300 |
| Ex. 15 | 88.7 | 89.2 | 90.2 | 0.000051 | ** | * |
| Ex. 16 | 88.7 | 89.1 | 90.3 | 0.000044 | ** | 300 |

* not measured

** below the measurement threshold of technique employed

**Claims**

1. Optical storage medium from which information can be read out and/or into which information can be recorded with a light beam (6), said optical storage medium comprising one or more base members (1) bearing on the side of the base members (1) on which the light beam (6) Is Incident, one or more information storage layers (3) and at least one light-transmissive cover film (5) with a thickness of from 10-200 μm wherein said cover films (5) are bonded to each other, to the surface (2) of the base members (1) on which the light beam (6) is incident and/or to one or more information storage layers (3) by means of one or more light-transmissive pressure-sensitive adhesive layers (4), and wherein said cover films (5) exhibit a vertical birefringence of less than 0.001 at 20 °C at least at the wavelength or wavelength spectrum, respectively, of said light beam (6) and/or an in-plane retardation of less than ± 25 nm at 20 °C at least at the wavelength or wavelength spectrum, respectively, of said light beam (6).

2. Optical storage medium according to claim 1, comprising one base member (1) the surface (2) of which bearing a structure of pits on which an Information storage layer (3) is formed.

3. Optical storage medium according to claims 1-2 comprising one light-transmissive cover film (5) bonded to the information storage layer (3) on the surface (2) of the base member (1) by means of a light-transmissive pressure-sensitive adhesive layer (4).

4. Optical storage medium according to one of claims 1 - 3 wherein the light-transmissive cover film or films (5) is or are formed by casting of one or more polymers dissolved in a solvent with subsequent drying and/or curing.

5. Optical storage medium according to claim 4 wherein the polymers dissolved in a solvent are selected from a group of polymers consisting of polycarbonate, cellulose triacetate or polyolefin-based polymers.

6. Optical storage medium according to one of claims 1 - 3 wherein the light-transmissive cover film or films (5) are formed by casting of a polymerizable precursor of a polymer with subsequent curing.

7. Optical storage medium according to claim 6 wherein the polymerizable precursor of the polymer comprises at least one acrylic-functional monomer which, when polymerized, displays a glass transition temperature of at least 10 °C and is not friable.

8. Optical storage medium according to claims 6 or 7 wherein the polymerizable precursor of the polymer contains blended therein one or more further polymers.

9. Optical storage medium according to claims 6 - 8 wherein the polymerizable precursor of the polymer comprises a monomer component selected from the group comprising (methyl)methacrylate, (methyl)ethylacrylate, (methyl) propylacrylate, lower amounts of (methyl) ($C_4$ - $C_8$ alkyl) acrylates, acrylonitrile, styrene alkyl acrylates, methacrylamides and alkyl substituted methacrylamides, one or more polymerization initiators and optionally one or more vinyl monomers having one or more unsaturated double bonds copolymerizable with the monomer(s) of the polymerizable precursor.

10. Optical storage medium according to any of claims 1 - 9 wherein the thickness of the light-transmissive pressure-sensitive adhesive layer or layers (4) is from 10 µm to 100 µm.

11. Optical storage medium according to any of claims 1 - 10 wherein the variation of the thickness of each light-transmissive cover film (5) and/or the variation of the thickness of the optical recording medium introduced by each light-transmissive cover film (5) as measured across an arbitrarily selected cross-section of the optical recording medium over Its entire extension is not more than about $\pm$ 3 µm.

12. Optical storage medium according to any of claims 1 - 11 wherein the variation of the thickness of each light-transmissive pressure-sensitive adhesive layer (4) and/or the variation of the thickness of the optical recording medium introduced by each light-transmissive pressure-sensitive adhesive layer (4) as measured across an arbitrarily selected cross-section of the optical recording medium over its entire extension is not more than about $\pm$ 3 µm.

13. Optical storage medium according to any of claims 1 - 12 comprising one light-transmissive cover film (5) and one light-transmissive pressure-sensitive adhesive layer (4) wherein the sum of the variation of the thickness of the light-transmissive cover film (5) or the variation of the thickness of the optical medium introduced by the light-transmissive cover film (5), respectively, and the variation of the thickness of the light-transmissive pressure-sensitive adhesive layer (4) or the variation of the thickness of the optical recording medium introduced by the pressure-sensitive adhesive layer (4), respectively, is not more than $\pm$ 5 µm, whereby such sum is measured, across an arbitrarily selected cross-section of the optical recording medium over its entire extension.

14. Method of preparing an optical recording medium according to any of claims 1 - 13 comprising

(1) providing at least one base member (1) having a surface (2) on which the light beam (6) is incident, said surface optionally comprising a structure of pits bearing an information storage layer (3),
(2) providing a multilayer film (12) comprising in the order given a releasable protective film (7), a light-transmissive cover film (5) the inner surface of which optionally comprising a structure of pits bearing an information storage layer (3), a light-transmissive pressure-sensitive adhesive layer (4) and a release liner (8), optionally further comprising between the light-transmissive cover film (5) and the pressure-sensitive adhesive film one or more further light-transmissive cover films (5') bonded to each other by means of one or more further light-transmissive pressure-sensitive adhesive layers (4')
(3) removing said release liner (8) and
(4) laminating the multilayer film (12) to the surface of the information storage layer (3) on the surface (2) of the base member (1).

15. Method according to claim 14 wherein at least one of the light-transmissive cover films (5) and (5'), respectively, are prepared by casting a curable precursor of such light-transmissive cover films (5) and (5'), respectively, onto a surface with subsequent curing, whereby said surface may be formed by a non-exposed surface of one of the layers of the multilayer film (12) or by a substrate on which the light-transmissive cover film is formed with subsequent incorporation as a cured layer into the multilayer film (12).

**Revendications**

1. Support de stockage optique duquel des informations peuvent être lues et/ou sur lequel des informations peuvent être enregistrées à l'aide d'un faisceau lumineux (6), ledit support de stockage optique comprenant un ou plusieurs membres de base (1), portant, sur la face des membres de base (1) sur laquelle le faisceau lumineux (6) est incident, une ou plusieurs couches de stockage d'informations (3) et au moins un film de couverture transmettant la lumière (5), ayant une épaisseur de 10-200 µm, **caractérisé en ce que** lesdits films de couverture (5) sont liés les uns aux autres, à la surface (2) des membres de base (1), sur lesquels le faisceau lumineux (6) est incident et/ou à une ou plusieurs couches de stockage d'informations (3), au moyen d'une ou de plusieurs couches adhésives, sensibles à la pression, transmettant la lumière (4) et **en ce que** lesdits films de couverture (5) manifestent une biréfringence verticale de moins de 0,001 à 20EC, à au moins la longueur d'onde ou au spectre de longueurs d'onde, respectivement, dudit faisceau lumineux (6) et/ou un retard dans le plan de moins de ± 25 nm à 20EC à au moins la longueur d'onde ou au spectre de longueurs d'onde, respectivement, dudit faisceau lumineux (6).

2. Support de stockage optique selon la revendication 1, comprenant un membre de base (1), dont la surface (2) porte une structure de piqûres sur laquelle une couche de stockage d'informations (3) est formée.

3. Support de stockage optique selon les revendications 1-2, comprenant un film de couverture transmettant la lumière (5), lié à la couche de stockage d'informations (3), sur la surface (2) du membre de base (1), au moyen d'une couche adhésive, sensible à la pression, transmettant la lumière (4).

4. Support de stockage optique selon l'une quelconque des revendications 1 - 3, **caractérisé en ce que** le ou les films de couverture transmettant la lumière (5) est ou sont formés par coulage d'un ou de plusieurs polymères dissous dans un solvant, avec séchage et/ou durcissement subséquent.

5. Support de stockage optique selon la revendication 4, **caractérisé en ce que** les polymères dissous dans un solvant sont sélectionnés parmi un groupe de polymères constitué du polycarbonate, du triacétate de cellulose ou de polymères à base de polyoléfines.

6. Support de stockage optique selon l'une quelconque des revendications 1 - 3, **caractérisé en ce que** le ou les films de couverture transmettant la lumière (5) sont formés par coulage d'un précurseur polymérisable d'un polymère avec durcissement subséquent.

7. Support de stockage optique selon la revendication 6, **caractérisé en ce que** le précurseur polymérisable du polymère comprend au moins un monomère à fonction acrylique, qui, en cas de polymérisation, manifeste une température de transition vitreuse d'au moins 10EC et qui n'est pas friable.

8. Support de stockage optique selon les revendications 6 ou 7, **caractérisé en ce que** le précurseur polymérisable du polymère contient, mélangé à ce dernier, un ou plusieurs polymères supplémentaires.

9. Support de stockage optique selon les revendications 6-8, **caractérisé en ce que** le précurseur polymérisable du polymère comprend un composant de monomère sélectionné parmi le groupe comprenant le (méthyl)méthacrylate, le (méthyl)éthylacrylate, le (méthyl)propylacrylate, des quantités inférieures de (méthyl)$(C_4 - C_8$ alkyl)acrylates, l'acrylonitrile, des acrylates styrène alkyle, des méthacrylamides et des méthacrylamides à substitution alkyle, un ou plusieurs agents d'amorce de la polymérisation et, en option, un ou plusieurs monomères vinyliques ayant une ou plusieurs liaisons doubles insaturées, copolymérisables avec le ou les monomères du précurseur polymérisable.

10. Support de stockage optique selon l'une quelconque des revendications 1 - 9, **caractérisé en ce que** l'épaisseur de la ou des couches adhésives, sensibles à la pression, transmettant la lumière (4), va de 10 µm à 100 µm.

11. Support de stockage optique selon l'une quelconque des revendications 1 - 10, **caractérisé en ce que** la variation de l'épaisseur de chaque film de couverture transmettant la lumière (5) et/ou la variation de l'épaisseur du support de stockage optique introduite par chaque film de couverture transmettant la lumière (5), telle qu'elle est mesurée à travers une section transversale sélectionnée arbitrairement du support de stockage optique sur toute son extension, n'est pas de plus d'environ ± 3 µm.

12. Support de stockage optique selon l'une quelconque des revendications 1 - 11, **caractérisé en ce que** la variation de l'épaisseur de chaque couche adhésive, sensible à la pression, transmettant la lumière (4) et/ou la variation de l'épaisseur du support de stockage optique introduite par chaque couche adhésive, sensible à la pression, transmettant la lumière (4), telle qu'elle est mesurée à travers une section transversale sélectionnée arbitrairement du support de stockage optique sur toute son extension, n'est pas de plus d'environ ± 3 µm.

**13.** Support de stockage optique selon l'une quelconque des revendications 1 - 12, comprenant un film de couverture transmettant la lumière (5) et une couche adhésive, sensible à la pression, transmettant la lumière (4), **caractérisé en ce que** la somme de la variation de l'épaisseur du film de couverture transmettant la lumière (5) ou la variation de l'épaisseur du milieu optique introduite par le film de couverture transmettant la lumière (5), respectivement, et la variation de l'épaisseur de la couche adhésive, sensible à la pression, transmettant la lumière (4) ou la variation de l'épaisseur du support de stockage optique introduite par la couche adhésive, sensible à la pression (4), respectivement, n'est pas de plus de ± 5 μm, une telle somme étant mesurée à travers une section transversale sélectionnée arbitrairement du support de stockage optique sur toute son extension.

**14.** Procédé de préparation d'un support de stockage optique selon l'une quelconque des revendications 1 - 13, comprenant

(1) la mise à disposition d'au moins un membre de base (1) ayant une surface (2) sur laquelle le faisceau lumineux (6) est incident, ladite surface comprenant en option une structure de piqûres portant une couche de stockage d'informations (3),

(2) la mise à disposition d'un film multicouches (12), comprenant, dans l'ordre indiqué, un film protecteur amovible (7), un film de couverture transmettant la lumière (5), dont la surface interne comprend, en option, une structure de piqûres portant une couche de stockage d'informations (3), une couche adhésive, sensible à la pression, transmettant la lumière (4) et une garniture amovible (8), comprenant, en outre, en option, entre le film de couverture transmettant la lumière (5) et le film adhésif sensible à la pression, un ou plusieurs films de couverture transmettant la lumière supplémentaires (5'), liés les uns aux autres au moyen d'une ou de plusieurs couches adhésives, sensibles à la pression, transmettant la lumière supplémentaires (4'),

(3) le retrait de ladite garniture amovible (8) et

(4) le laminage du film multicouches (12) à la surface de la couche de stockage d'informations (3) sur la surface (2) du membre de base (1).

**15.** Procédé selon la revendication 14, **caractérisé en ce qu'**au moins l'un des films de couverture transmettant la lumière (5) et (5'), respectivement, est préparé par coulage d'un précurseur durcissable de films de couverture transmettant la lumière de ce genre (5) et (5'), respectivement, sur une surface à durcissement subséquent, ladite surface pouvant être formée par une surface non exposée d'une des couches du film multicouches (12) ou par un substrat sur lequel le film de couverture transmettant la lumière est formé, avec incorporation subséquente en tant que couche durcie dans le film multicouches (12).

**Patentansprüche**

**1.** Optisches Speicherungsmedium, aus dem mit einem Lichtstrahl (6) Informationen ausgelesen oder in dem mit einem Lichtstrahl Informationen aufgezeichnet werden können, wobei das optische Speicherungsmedium folgendes umfaßt: einen oder mehrere Basisglieder (1), die auf der Seite der Basisglieder (1), auf der der Lichtstrahl (6) einfällt, eine oder mehrere Informationsspeicherungsschichten (3) und mindestens einen lichtdurchlässigen Deckfilm (5) mit einer Dicke zwischen 10-200 μm tragen, wobei die Deckfilme (5) mit Hilfe einer oder mehrerer lichtdurchlässiger Haftkleberschichten (4) aneinander, an die Oberfläche (2) der Basisglieder (1), auf die der Lichtstrahl (6) einfällt, und/oder an eine oder mehrere Informationsspeicherungsschichten (3) gebunden sind und wobei die Deckfilme (5) mindestens bei der Wellenlänge beziehungsweise dem Wellenlängenspektrum des Lichtstrahls (6) eine vertikale Doppelbrechung von unter 0,001 bei 20°C und/oder mindestens bei der Wellenlänge bzw. dem Wellenlängenspektrum des Lichtstrahls (6) eine Verzögerung in der Ebene von weniger als ± 25 nm bei 20°C aufweisen.

**2.** Optisches Speicherungsmedium nach Anspruch 1, mit einem Basisglied (1), dessen Oberfläche (2) eine Struktur aus Vertiefungen trägt, auf denen eine Informationsspeicherungsschicht (3) ausgebildet ist.

**3.** Optisches Speicherungsmedium nach den Ansprüchen 1-2, mit einem lichtdurchlässigen Deckfilm (5), der mit Hilfe einer lichtdurchlässigen Haftkleberschicht (4) auf der Oberfläche (2) des Basisglieds (1) an die Informationsspeicherungsschicht (3) gebunden ist.

4. Optisches Speicherungsmedium nach einem der Ansprüche 1-3, wobei der oder die lichtdurchlässigen Deckfilme (5) ausgebildet werden, indem ein oder mehrere in einem Lösungsmittel gelöste Polymere gegossen und danach getrocknet und/oder gehärtet werden.

5. Optisches Speicherungsmedium nach Anspruch 4, wobei die in einem Lösungsmittel gelösten Polymere ausgewählt sind aus einer Gruppe von Polymeren bestehend aus Polycarbonat, Cellulosetriacetat oder auf Polyolefin basierenden Polymeren.

6. Optisches Speicherungsmedium nach einem der Ansprüche 1-3, wobei der oder die lichtdurchlässigen Deckfilme (5) ausgebildet werden, indem ein polymerisierbarer Vorläufer eines Polymers gegossen und danach gehärtet wird.

7. Optisches Speicherungsmedium nach Anspruch 6, wobei der polymerisierbare Vorläufer des Polymers mindestens ein acrylfunktionelles Monomer umfaßt, das nach Polymerisierung eine Glasübergangstemperatur von mindestens 10°C aufweist und nicht bröcklig ist.

8. Optisches Speicherungsmedium nach Anspruch 6 oder 7, wobei der polymerisierbare Vorläufer des Polymers ein oder mehrere weitere Polymere darin eingemischt enthält.

9. Optisches Speicherungsmedium nach den Ansprüchen 6-8, wobei der polymerisierbare Vorläufer des Polymers eine Monomerenkomponente enthält, ausgewählt aus der Gruppe bestehend aus Methylmethacrylat, Methylethylacrylat, Methylpropylacrylat, geringeren Mengen von (Methyl) (C$_4$-C$_8$alkyl)acrylaten, Acrylonitril, Styrolalkylacrylaten, Methacrylamiden und alkylsubstituierten Methacrylamiden, einem oder mehreren Polymerisationsinitiatoren und optional ein oder mehrere Vinylmonomeren mit einer oder mehreren ungesättigten Doppelbindungen, die gemeinsam mit dem Monomer oder den Monomeren des polymerisierbaren Vorläufers polymerisiert werden können.

10. Optisches Speicherungsmedium nach einem der Ansprüche 1-9, wobei die Dicke der einen oder mehreren lichtdurchlässigen Haftkleberschichten (4) zwischen 10 μm und 100 μm liegt.

11. Optisches Speicherungsmedium nach einem der Ansprüche 1-10, wobei die Schwankung der Dicke jedes lichtdurchlässigen Deckfilms (5) und/oder die Schwankung der Dicke des durch jeden lichtdurchlässigen Deckfilm (5) eingeführten optischen Aufzeichnungsmediums bei Messung über einen willkürlich gewählten Querschnitt des optischen Aufzeichnungsmediums über seine ganze Erstreckung hinweg nicht über etwa ± 3 μm liegt.

12. Optisches Speicherungsmedium nach einem der Ansprüche 1-11, wobei die Schwankung der Dicke jeder lichtdurchlässigen Haftkleberschicht (4) und/oder die Schwankung der Dicke des durch jede lichtdurchlässige Haftkleberschicht (4) eingeführten optischen Aufzeichnungsmediums bei Messung über einen willkürlich gewählten Querschnitt des optischen Aufzeichnungsmediums über seine ganze Erstreckung hinweg nicht über etwa ± 3 μm liegt.

13. Optisches Speicherungsmedium nach einem der Ansprüche 1-12, das einen lichtdurchlässigen Deckfilm (5) und eine lichtdurchlässige Haftkleberschicht (4) umfaßt, wobei die Summe der Schwankung der Dicke des lichtdurchlässigen Deckfilms (5) beziehungsweise die Schwankung der Dicke des durch den lichtdurchlässigen Deckfilm (5) eingeführten optischen Mediums und die Schwankung der Dicke der lichtdurchlässigen Haftkleberschicht (4) beziehungsweise die Schwankung der Dicke des durch die Haftkleberschicht (4) eingeführten optischen Aufzeichnungsmediums nicht über ± 5 μm liegt, wobei diese Summe über einen willkürlich gewählten Querschnitt des optischen Aufzeichnungsmediums über seine ganze Erstreckung hinweg gemessen wird.

14. Verfahren zum Herstellen eines optischen Aufzeichnungsmediums nach einem der Ansprüche 1-13, umfassend:

(1) Bereitstellen mindestens eines Basisglieds (1) mit einer Oberfläche (2), auf der der Lichtstrahl (6) auftrifft, wobei die Oberfläche optional eine Struktur aus Vertiefungen umfaßt, die eine Informationsspeicherungsschicht (3) tragen,
(2) Bereitstellen eines mehrschichtigen Films (12), der in der angegebenen Reihenfolge einen abziehbaren Schutzfilm (7), einen lichtdurchlässigen Deckfilm (5), dessen innere Oberfläche optional eine Struktur aus Vertiefungen umfaßt, die eine Informationsspeicherungsschicht (3) tragen, eine lichtdurchlässige Haftkleberschicht (4) und eine Trennzwischenlage (8) und optional weiterhin zwischen dem lichtdurchlässigen Deckfilm (5) und dem Haftkleberfilm eine oder mehrere weitere lichtdurchlässige Deckfilme (5') umfaßt, die mit Hilfe einer oder mehrerer weiterer lichtdurchlässiger Haftkleberschichten (4') miteinander gebunden sind,

(3) Entfernen der Trennzwischenlage (8) und

(4) Laminieren des mehrschichtigen Films (12) auf die Oberfläche der Informationsspeicherungsschicht (3) an der Oberfläche (2) des Basisglieds (1).

15. Verfahren nach Anspruch 14, wobei mindestens einer der lichtdurchlässigen Deckfilme (5) beziehungsweise (5') hergestellt wird, indem ein härtbarer Vorläufer dieser lichtdurchlässigen Deckfilme (5) beziehungsweise (5') auf eine Oberfläche gegossen und danach gehärtet wird, wodurch die Oberfläche durch eine nicht freiliegende Oberfläche einer der Schichten des mehrschichtigen Films (12) oder durch ein Substrat gebildet werden kann, auf dem der lichtdurchlässige Deckfilm unter späterem Einbau als gehärtete Schicht in dem mehrschichtigen Film (12) ausgebildet wird.

6

3

5

4

2

1

_Fig. 1a_

6

9

5

4

3a

3b

2

1

_Fig. 1b_

_Fig. 2_

Fig. 3

Fig. 4

_Fig. 5_